# EUROPEAN PATENT SPECIFICATION

(11) **EP 1 483 186 B1**
(45) Date of publication and mention of the grant of the patent: **15.11.2006**
(21) Application number: 03737515.1
(22) Date of filing: 04.02.2003
(51) Int. Cl.: B65G 63/02, B65G 47/30

(54) **A SYSTEM FOR TRANSFERRING PRODUCTS FROM A STORAGE AREA TO A DELIVERY AREA**
SYSTEM ZUM TRANSFER VON PRODUKTEN VON EINEM LAGERUNGSBEREICH ZU EINEM LIEFERBEREICH
PROCEDE POUR TRANSFERER DES PRODUITS D'UNE ZONE DE STOCKAGE A UNE ZONE DE DISTRIBUTION

(30) Priority: 05.02.2002 NO 20020585
(43) Date of publication of application: 08.12.2004
(73) Proprietor: ZOPA AS, 0678 Oslo (NO)
(72) Inventor: OVERSKEID, Oyvind, N-1405 Langhus (NO); SORENSEN, Per, N-0678 Oslo (NO); KVIFTE, Halvor, N-1344 Haslum (NO); HOEG, Arne, N-0273 Oslo (NO)
(74) Representative: Briddes, Sam
(86) International application number: PCT/NO2003/000037
(87) International publication number: WO 2003/066487

(56) References cited:
- FR-A1- 2 756 075
- IE-A2- 950 687
- US-A- 4 015 537

## Description

The invention relates to a system for transferring products from an area for storing a stock of goods to an area where the products have to be delivered.

In small shop premises, refrigerators for drinks are often located at a relatively great distance from the customer service counter. This leads to a reduction in sales since the customers forget to buy the drinks and/or do not wish to leave the queue in order to return to the refrigerator. A solution to this problem is to place the refrigerators near the customer service counter. This is not always practical, since modem refrigerated cabinets consume a great deal of space and there is a limited amount of space around the customer service counter.

With the system according to the invention, the storage of chilled drinks can take place in the shop's storage premises, while only a limited number of products are located in the shop premises. This offers substantial space saving in small shop premises. The system according to the invention also provides the opportunity of delivering the products directly at the customer service counter in a unit which is small and compact due to the fact that it only has to store a limited number.

The object of the invention is to contribute to/achieve an automatic feeding of products from an area for storing stock to a delivery area, such as a customer service counter, located at a distance from the delivery area. The system will preferably be employed in a shop premises, a filling station or another suitable location where it is desirable to transport the product from one area to another.

The system comprises at least a storage unit, a product collector, a product rotator, a transport unit, a transfer unit, a charging unit and a track system that permits the transport unit to convey the products between these different units, where the transport unit is moved along the track system. The system also included a central control unit, which transmits signals between the various units in the system.

The storage unit employed in the system stores products and may also be responsible for chilling the products. Several storage units may be included in the system depending on the system's capacity and how many different types of product that have to be distributed in the system. In a preferred embodiment of the invention three storage units may constitute the system's storage capacity.

The products are delivered from the storage unit to a product collector through a delivery opening in the storage unit. The product collector further makes the product available to the transport unit and delivers it from the product collector to a product holder mounted on the transport unit.

The transport unit comprises product holders on which at least one product is placed, a propulsion unit, an energy storage unit for storing energy for driving the propulsion unit and a control unit for controlling the propulsion unit. The transport unit conveys the product along the track system from the product collector to the product rotator where the product's distinguishing mark such as, for example, a label is correctly positioned in relation to how the distinguishing mark is to be further displayed during transport in the transport unit along the track system until and/or when displayed in the transfer unit.

When the transport unit reaches the transfer unit, the product is moved from the transport unit in through a lead-in portion in the transfer unit. The product is conveyed in the transfer unit until it is dispensed to the customer or user at the transfer unit's delivery portion, for example at a customer service counter or the like. There is a difference in level preferably in the vertical direction between the transfer unit's lead-in portion and the delivery portion, since the track system is mounted at ceiling height.

After delivering the product, the transport unit continues along the track system to the charging unit for charging the transport unit's energy storage unit. On completion of charging, the transport unit then continues to the storage unit in order to pick up products from the product collector for further transport to the transfer unit.

The track system is composed of modules, thus enabling the track system to be adapted to suit the individual premises in which it has to be employed. The individual module may be standardised units such as "straight" or "curved". The module is composed of a rail module and a cover element. The rail module is mounted by being attached to a suspension at ceiling height, the rail element being clamped inside rubber profiles that are integrated in the suspension. The cover element is then mounted on the outside of the rail module. If the system is used in premises such as, e.g., a shop, the cover will protect the public in case the product should fall out of the product holder.

The system is equipped with a number of sensors that are mounted in or in connection with the various units.

### Transport unit

The transport unit/carriage for the product to be transported from the storage unit to the transfer unit comprises a body with guide elements for guiding it along a rail track, and a product holder, preferably mounted on the underside of the body. The guide elements may be sliding elements or rolling elements, for example wheels, balls, magnetic sliding devices or another device that offers little friction and a similar type of transport characteristics. The product holder is preferably attached to the underside of the transport unit at two points, thus making it rotatable about one point which is preferably the front point and releasably attached to the second, preferably the rear point. A projection on the product holder is designed so as to interact with a suspension device, e.g. such as a hook, on the transport unit, thus securing the product holder in the horizontal position during transport.

The product holder may also be attached to the transport unit by means of an intermediate piece which is preferably at least as long as the length of the product holder. The product holder is then attached to the intermediate piece at a fixed point, being rotatable about this point, and has a second attachment point that can be activated, e.g. by the influence of a physical obstacle along the transport unit's rail track. The intermediate piece is attached to the transport unit's body in a suitable manner. In a preferred embodiment the product is placed in a horizontal position in the product holder.

Other embodiments of the transport unit with the product holder where the product holder is in a different position relative to the transport unit may also be envisaged, where, e.g., the product holder is located above the transport unit.

The product holder is preferably provided with support elements for holding the product in place. The design of the product holder and the support elements will depend on the type of product that has to be transported. For transport of a cylindrical product the support elements may, e.g. be mounted on the product holder so as to form a cradle in which the product can rest.

The track system for the transport unit is preferably composed of a rail track. The rail track is preferably suspended in the ceiling in a space in such a manner that it is freely suspended in the space. The transport unit's guide elements preferably run on the top of the rail track with the transport unit body, the product holder and thereby the product suspended below the rail track.

The rail track may either be a continuous body or composed of several rail modules. A rail track made of rail modules provides flexibility and simplifies the adaptation of the system to suit different room sizes and shapes. The rail track may be fixed at several attachment points, e.g. by means of screwing. In a preferred embodiment the rail modules are partially clamped into a rubber profile in order to damp vibrations and simplify alignment of the trackway and the transport unit. In a preferred embodiment the rail track and the transport unit are enclosed by a cover extending along the entire rail track. The cover will preferably also be made of cover elements and be adapted to the rail suspension in such a manner that the cover elements can be clamped to the rail, thereby being secured without screwing, gluing or the like. In case a product should accidentally become detached from the product holder, it will thereby be caught by the cover and not represent a danger to people standing under the rail track. In the event of a power cut or if the rail track requires inspection, one or more cover elements can be taken down, thus providing access to the rail.

The transport unit is driven by a propulsion unit of a known per se type. This may, e.g., be an AC motor which is brushless, without gears, where the driving wheel is fixed to the top of the rail track along which the transport unit runs. A second set of guide elements may be provided below the driving wheels and run freely along the other side of the rail track. Alternatively, an extra set of guide elements may additionally or as a replacement extend at the side of the rail track.

The energy supply to the motor is preferably in the form of stored energy, such as, e.g., batteries or condensers mounted on the body of the transport unit. In a preferred embodiment condensers are employed that are designed to be capable of storing an amount of energy corresponding to the requirements of the transport unit in order to be able to complete a circuit of the system. The condensers are charged in a charging unit.

In a preferred embodiment the transport unit runs along a rail track. Two sets of guide elements extend on opposite sides of the rail track while the product is suspended under the rail track. The rail track may be provided with devices for supplying information to the transport unit concerning the presence, e.g. of bends and stations in the system. These devices may, e.g., be recessed magnets, antennae or light sources. The transport unit may then be provided with sensors for detection of the information, such as, e.g., a magnetic field in the rail track. In a preferred embodiment magnetic Hall effect sensors are used. A processor in the transport unit calculates the distance travelled between the information devices. This calculation may, e.g. be based on the number of revolutions of the motor between each time the transport unit receives a signal from an information device.

The transport unit has an integrated control unit which is partly self-programming. Before the transport unit is used in the system for the first time, the transport unit completes an initialisation circuit in the system. The transport unit is then run at reduced speed and distance information is stored in a memory device associated with the transport unit's processor. In connection with the distance information, other information is also stored associated with the distance information, such as the presence of a bend or a station in the system. The transport unit has preprogrammed information on how it should behave in connection with the events in the track, thereby providing a unique, specially adapted program for each track.

### Charging unit

The charging unit is an inductive unit comprising means for transmitting energy to the transport unit corresponding to at least the energy consumption required to transport the transport unit a desired distance. The charging unit may be designed to have room for several transport units at the same time, and in a preferred embodiment there is room to charge 3 transport units simultaneously. The charging unit is preferably connected to the power grid.

The energy transmission is performed inductively, by bringing a coil on the transport unit (secondary coil) close to a coil (primary coil) in the charging unit. The charging unit coil is impressed with an alternating current, and the magnetic field created causes current to be generated in the transport unit's coil. This current is used to charge an energy storage unit in the transport unit, preferably one or more condensers.

The transport unit is preferably equipped with a meter for measuring the energy storage unit's charge level, e.g. voltage over the condenser(s). When the storage unit is full, a signal can be transmitted to the charging unit in order to stop the charging. If the charge level drops below a fixed threshold level, a signal is transmitted in a similar manner in order to restart the charging. Since each transport unit will be able to be charged at each of the positions in the charging unit, the transport units will be able to be moved during the charging process, with the result that the charging is started at one position and completed at another position. This increases the system's capacity as space can be vacated and charging started without waiting for the charging of the transport unit in front to be completed. In a simpler embodiment the charging can be in progress all the time at all the spaces in the charging unit. A preferred embodiment employs a combination of these. In this embodiment the charge level is measured and when full charge is reached the charging circuit is short-circuited. An effect of this will be that the power in the charger becomes lower. A measurement of the charging power will thereby give an indication of when the charging is completed, and this can be used to give a feedback to the system.

Since the magnetic field created round a coil becomes weaker with increased distance to the coil (I/R in the far field), it is important to have accurate positioning of the coil in the transport unit relative to the coil in the charging unit. To obtain sufficient power, a positioning accuracy of the magnitude of 1mm will be required. It may therefore be advantageous to employ a positioning device for positioning the transport units in the charging unit. In a preferred embodiment this positioning is accomplished by means of physical guide devices in or beside the rail tracks, e.g. in the form of a recess in which the wheels are positioned, or a barrier that is placed in the track and stops the transport unit. The positioning device may also comprise optical detectors in the transport unit, or a power indicator that measures transferred power and a regulating device that adjusts the position of the transport unit until maximum power is achieved.

In a preferred embodiment the charging unit also comprises means for transmitting signals to the transport units that are being charged. The signal transmission is preferably performed via the charging voltage, but may also be carried out by means of separate devices such as, e.g., electromagnets that are sensed by magnetic sensors via an optical link or the like. Via this signal transmission the transport unit receives a message regarding which transfer unit/which goal it should aim for and instructions to start running according to the program stored in the memory.

### Storage unit

The storage unit comprises at least one abutment portion, one delivery opening arranged in or in connection with the storage unit's abutment portion and at least one supporting device.

The products that have to be stored in the storage unit are placed in layers on the supporting device, with at least a part of the supporting device being arranged movably in the storage unit along the abutment portion. Both the supporting device and the abutment portion in the storage unit may be tilted. The longitudinal axis of the storage unit's abutment portion may be oriented at an angle that deviates relative to the vertical axis, and this angle may be, for example, approximately 0-20°, preferably 7-12°, with the result that the abutment portion slopes backwards and the products receive support in the height direction along the abutment portion. Furthermore, the supporting device may be tilted, thus forming an angle between the supporting device's surface where the products are placed, and a plane perpendicular to the abutment portion's longitudinal axis, where this angle may preferably be 30°.

An opening is also provided for delivery of products in or in connection with the storage unit's abutment portion preferably in the storage unit's upper part, the delivery opening being adapted to the product's size and shape. The products are stacked in layers on the supporting device and, on account of the supporting device's sloping position, their rolling direction will be towards the abutment portion. The inclination of the abutment portion provides a supporting function in the height direction for those products that are stored on the supporting device.

The storage unit may furthermore be equipped with coolants and possibly a structure for collecting liquid in case a product such as a bottle should begin to leak. This collecting structure is provided in a lower portion of the storage unit.

The storage unit's supporting device is arranged in such a manner that at least a part thereof can be moved relative to the storage unit's abutment portion in a vertical direction. The supporting device is positioned along the storage unit's abutment portion in such a manner that the top layer of products is at all times positioned for delivery through the delivery opening. The product is passed through the delivery opening for further transport in the system. After the product that is located nearest the discharge opening has been delivered through the discharge opening, the next product in the product row will be moved forward due to the inclination of the supporting device and the product's weight and positioned at the delivery opening. After the top row of the storage unit's stock has been removed by the entire product row being passed out through the delivery opening, the products are moved upwards by raising at least a part of the supporting device relative to the storage unit's abutment portion until the product row that is now located at the top is positioned for delivery at the delivery opening.

The supporting device may, for example, be composed of a surface, support bodies, a box-like structure, projecting structures or other elements suited for storage of products.

The storage unit's supporting device may be arranged at different angles depending on which product has to be delivered from the storage unit. When bottles have to be delivered in the system, for example, it has been found that an angle of approximately 30° between the supporting device's surface where the products are located and the normal plane of an axis extending parallel to the longitudinal direction of the abutment portion provides favourable conditions for delivery of products through the delivery opening.

Different types of devices may be employed in order to achieve movement of at least a part of the supporting device, for example a part of the supporting device may be moved along the rail system by means of springs, a lift system in the form of a wire arrangement with motor drive, toothed racks, a chain, a pulley system, etc.

In addition to adapting for delivery of different products, the storage unit's supporting device may be given several alternative designs utilising different principles when the storage unit has to be filled with new products. It is a condition for the design of the storage unit that it must be possible to fill a completely empty storage unit with products and to replenish a partly filled storage unit.

It will be possible to standardise the quantity of products that have to be filled in the storage unit. For example, a container or a box of a certain size may be employed, where the products are placed in the container and can easily be transferred ready-stacked to the supporting devices, thus permitting the storage unit to be filled up in a fast and efficient manner. This method of filling the storage unit will be particularly suitable for use in a second embodiment of the storage unit.

In a first embodiment of the storage unit it is composed of a depot which in addition to the abutment portion comprises two side portions that support the products to be placed in the depot. These side portions and the abutment portion together form a cavity. The depot may further be provided with a bottom portion and a ceiling portion, with possibly a third side portion, which together with the abutment portion and the two side portions encloses the cavity. This third side portion may be provided with a portion that can be opened and closed or may itself be opened and closed. The ability to open this third side portion is necessary in order to ensure access to the depot when it has to be filled with products. In the depot's cavity there is provided a supporting device in the form of a movable plate body, which is tilted relative to the depot. Furthermore, in the depot's abutment portion in the upper part of the depot there is provided a delivery opening for delivery of products.

In the depot's cavity the products that constitute the stock of the depot are stacked up in layers from a supporting device. In an alternative embodiment the depot cavity may be designed in such a manner that if the products are not symmetrical about both their central, vertical and horizontal axes, they are forced to be placed in the depot's cavity in the correct manner. This may be achieved, for example, by one or more of the side portions or the abutment portion in the depot's cavity having a groove or a shape corresponding to the product's external contour or at least the contours of one of the ends of the products, thus making it physically difficult to place a product in the wrong way in the depot's cavity.

According to this first embodiment of the storage unit the depot is arranged movably in a box structure. The box structure will be composed of at least three walls that form a cavity and may in addition be provided with a fourth wall or more walls if desirable. The fourth wall is arranged so that it can be opened or a door may be provided in the wall that permits access to the depot's cavity. This fourth wall or the opening formed here coincides substantially with the depot's open sides or at a portion that can be opened, thus permitting access to the depot's cavity. If desirable, the box structure may be equipped with a covering ceiling structure and possibly a bottom structure. Moreover, the box structure may be provided with an opening perhaps with a hatch that can be opened thus enabling the product collector to deliver the product to the transport unit's product holder.

The box structure with the depot may be located directly on a floor or may be placed some distance up from the floor.

The depot is moved vertically in the box structure's cavity by means of a lift system. In an upper position the delivery opening provided in the depot's abutment portion will be oriented in such a manner that products can be delivered from the depot. In the upper position, space is vacated under the depot either the box structure's cavity or under the box structure. This space may be employed, for example, for storing products. This is particularly advantageous if the system is to be used in small premises and it is desirable to have products accessible in order to fill the depot.

When the depot has to be filled or replenished with products, the depot with the supporting device are lowered to a lower position where the products constituting the depot's stock are stacked up in layers from the supporting device. The depot is then moved to the upper position in the box structure's cavity until the delivery opening is suitably positioned at the area where the product is to be delivered, preferably near the product collector. After the depot is placed in this upper position, the supporting device with the stock are raised in the depot's cavity until the top product layer is positioned at the delivery opening. After delivery of the last product in the top product layer through the delivery opening, the supporting device will be moved upwards in the depot's cavity in such a manner that the product layer which is now located at the top is positioned at the delivery opening.

After the last product has been discharged through the delivery opening, the supporting device is moved up over the delivery opening in the depot's abutment portion. This movement will cause the supporting device to transmit a signal via a sensor, which may be located in this upper portion of the depot's cavity over the delivery opening, to the effect that the depot is empty and requires filling. The supporting device will be lowered in the depot's cavity until it reaches the bottom of the depot, whereupon the whole depot is lowered to a lower position in the box structure's cavity where the depot can be filled by products being placed on the supporting device. The depot is then raised in the box structure's cavity so that the delivery opening is again positioned for delivery of products, whereupon the supporting device moves the upper product layer of the stock into position at the delivery opening.

In a simplified version of this first embodiment of the storage unit, a depot may be employed that is permanently mounted in the box structure's cavity, thus preventing the depot from being moved relative to the box structure. In this embodiment the depot is designed in such a manner that it is possible to gain access to the depot even though it is located in an upper position in the box structure's cavity. In this case the supporting device will be arranged movably in the depot, for example by means of the lift system. When products have to be filled or replenished, the supporting device is lowered right down to the bottom of the depot and the products are stacked up in layers up from the supporting device.

A disadvantage of these two aforementioned solutions is that replenishment of products in a depot that is not completely empty results in the new products being placed on top of the products already located in the depot. This is an unsatisfactory solution, particularly if the products are perishable, and in addition a filling procedure is chosen where new products are filled repeatedly before the depot is completely empty. In this case there is a risk that the products located right at the bottom will be extremely old before they are removed from the depot and transported in the system for delivery.

In the storage unit's second embodiment the storage unit comprises an abutment portion which is tilted so that the abutment portion's longitudinal axis is preferably oriented at an angle that deviates relative to the vertical axis, where this angle may, for example, be approximately 0-20°, preferably 7-12°, with the result that the abutment portion slopes backwards and the products are supported in the height direction.

Furthermore, a delivery opening is provided in or in connection with the abutment portion, preferably at the abutment portion's upper part. According to this second embodiment the supporting device is composed of a support device and a lifting device, both of which are attached to the abutment portion, where those products that constitute the stock are placed in layers on the support device with rolling direction towards the abutment portion, while the lifting device is used for feeding the products in the stock to the delivery opening. The lifting device and the support device may be inclined, thus forming an angle between the supporting device's surface/lifting device's surface where the products are located, and a plane perpendicular to the abutment portion's longitudinal axis, where this angle may preferably be 30°.

The storage unit according to the second embodiment of the invention may be provided with additional side portions, for example two, which extend normally on the abutment portion along the abutment portion's longitudinal direction, with the result that in addition to the support from the abutment portion, the products receive support at two of their lateral surfaces. If the products that have to be stored in the storage unit are bottles, the bottles are placed on the support and lifting devices in such a manner that their long side abuts against the abutment portion. The two supporting portions will ensure adequate support at the bottom and top of the bottles respectively. If the same storage unit that is employed for storage of bottles is also to be employed for storage of cans, for example mineral water cans, without making major constructional modifications in the storage unit, it may be necessary to equip the two extra side portions with inlays that compensate for the fact that the cans are shorter than the bottles.

The storage unit according to the second embodiment may be placed in a cold room in such a manner that the storage unit's delivery opening is positioned for delivery to a track system, which is located outside the cold room or passes through the cold room.

One or more storage units according to the second embodiment may be arranged in a box structure corresponding to that described for the first embodiment of the storage unit. Where the products stored in the storage unit have to be kept cooled it will be most advantageous for the storage unit to be closed both at the bottom and the top and at all the sides. One or more doors may be provided in the box structure which can be opened and closed, thus ensuring access to the storage unit, for example when products have to be placed on the supporting device. Furthermore, the box structure may be provided with an opening, which may be equipped with a hatch that can be opened, thus enabling the product collector to deliver the product to the transport unit's product holder.

The storage unit's abutment portion according to the second embodiment of the invention may be composed of a rail system, the support device and the lifting device being attached to the rail system. It will be possible to employ several different types of device in order to enable the lifting device to be moved relative to the abutment portion, for example springs, a wire arrangement with motor drive, toothed racks, a chain, etc.

Within the scope of the invention the abutment portion can be designed in alternative ways that permit movement of at least the lifting device along the abutment portion. In the following description of the invention the rail system is employed without this being considered limiting for the scope of the invention.

The support device will preferably be substantially stationary, but may also be arranged so as to be capable of being moved along the rail system. The lifting device is arranged to be movable to the same rail system. The support device and the lifting device are tilted so that the rolling direction of the products placed on the support and lifting devices is towards the storage unit's abutment portion, for example the rail system. The support devices may, for example, be designed as one or more projecting devices, such as a fork with two, three or more arms. The lifting devices, moreover, may also be composed of one or more projecting devices at the same angle as the support devices, for example in the form of a fork with two or more arms.

The lifting device is arranged to be rotatable relative to the rail system and can be rotated about its attachment to the rail system with the result that the lifting device is oriented parallel to the storage unit's abutment portion. The support device is adapted in such a manner that the lifting device can pass the support device both when the lifting device is unfolded and when it is folded. The lifting device may be attached to a plate body equipped with, for example, roller devices movably arranged in the rail system, for example along internal rails. In order to achieve displacement movement of the lifting device, it may be equipped with some kind of propulsion, for example motor drive, a wire system etc. Where the support device is designed with two fork arms, the lifting device can pass the support device in an unfolded state inside the support devices' two fork arms. If the support device is designed with three fork arms, the lifting device can pass the support device in an unfolded state, thus enabling the lifting device's two arms to pass in the spaces formed between the support devices' three arms. In a folded state the lifting device can pass the support device in the rail system inside the support devices' attachment point to the rail system. Depending on the number of arms in the lifting/support devices it will be possible to adapt these relative to one another in such a manner that they can pass one another.

In the storage unit according to this second embodiment, products in an initial position will be placed on the support device. The products will be transferred to the lifting device from the support device as the lifting device passes the support device. After this transfer of products, the support device will again be ready to receive new products for storing in the storage unit.

The lifting device conveys the products that have been transferred from the support device upwards along the rail system in such a manner that the product layer that is located at the top is positioned at the delivery opening, and the product in this layer that is located nearest the abutment portion is positioned for discharge through the delivery opening. The inclination of the lifting device ensures that the product is delivered through the delivery opening and that the next product in the product layer is then advanced to the delivery opening. When all the products in this product layer have been delivered through the delivery opening, the lifting device is moved upwards along the rail system in such a manner that the next product layer becomes accessible at the delivery opening. This procedure is repeated until all the products placed on the lifting device have been delivered.

After the last product in the product layer located at the bottom against the lifting device has been removed, the lifting device is folded in towards the storage unit's abutment portion. The lifting device can be moved down in this folded state past the support device where the lifting device is again unfolded into a position under the support device. The lifting device is then moved upwards along the rail system and will pass the support device in an unfolded state, for example by the support device being arranged so that the lifting device can pass inside the support device's two fork arms or in the spaces between the support device's three arms. As the lifting device passes the support device the products located on the support device will be transferred to the support on the lifting device, and the lifting device will continue to convey the products upwards along the rail system until the top product layer is located on a level with the delivery opening.

One of the advantages of this solution is that the support device and the lifting device act independently of each other and the feeding of products out through the delivery opening can therefore take place almost continuously, without long interruptions due to filling of the depot. The products are placed in the storage unit on the support device while products are being removed through the delivery openings from the lifting device. Furthermore, it will be possible to have several lifting and support devices in the same storage unit.

This solution will ensure that the product group that has been lying for the longest period in the storage unit will be delivered first. The above-mentioned drawbacks associated with the first embodiment of the storage unit will thereby be avoided, where those products located at the bottom of the stock of goods sometimes pass their expiry date since the stock is replenished before all the products have been removed from the depot. According to the second embodiment of the storage unit the new products that have to be filled in the storage unit are placed on the empty support device. Thus it is unnecessary for the lifting device to collect these new products before the last product delivered from the lifting device has been discharged through the delivery opening. It will therefore be possible to keep a check on the expiry date of the products stored in the storage unit. At the same time a more continuous delivery of products through the delivery opening will be achieved, since filling of the storage unit can be performed at the same time as products are being delivered.

In the alternative solutions for feeding products to a delivery opening as described above, sensors may be employed for registering when the products in the storage unit reach a predetermined minimum number. Instructions will then be given in the system that the storage unit must be filled with products. Sensors may also be provided at different heights according to requirements, for example in the depot cavity according to the first embodiment or at the abutment portion according to the first or the second embodiment, thus making it possible to register the location of the supporting device or the lifting device in the depot's cavity, or along the storage unit's abutment portion. For example, placing sensors at a certain distance from the delivery opening will permit the system to provide information that the storage unit should be filled when a specific number of products are left in the storage unit. Alternatively or in addition, sensors may be employed that are placed in the storage unit's topmost area near the delivery opening, these registering the passing of the supporting device and the lifting device respectively. On the basis of these registrations, information may be transmitted in the system that the depot is in the process of being emptied.

Information that the storage unit is in the process of being emptied or is empty can be transmitted to a central control unit, to another of the system's components or can be signalled by a light being illuminated on the outside of the storage unit/depot /box structure.

Where a lift system, such as a wire system is employed in connection with propulsion of the supporting device or the lifting device, the wire may be equipped with a sensor, which for example registers the number of revolutions of one of the control wheels that form part of the lift system. An embodiment of this kind of the storage unit will make it possible to predict when the storage unit has to be replenished since, on the basis of the number of revolutions of the control wheel, it can be calculated where the supporting device or the lifting device are located along the storage unit's abutment portion. It will thereby be possible to calculate how large a percentage of the products in the stock have been delivered from the storage unit.

### Product collector and cooperation with the storage unit

At the delivery opening for each of the storage units included in the system there is provided a product collector. The products are delivered from the storage unit to a product collector through the storage unit's delivery opening. The product collector furthermore makes the product accessible to the transport unit and it is then delivered from the product collector to a product holder mounted on the transport unit.

The product collector comprises an upper portion which is designed in such a manner that it is suitable for receiving products discharged through the delivery opening. In a preferred embodiment of the invention this upper portion comprises two support surfaces which are tilted in such a manner that both the support surface slope in towards the middle of the product collector. Between the support surfaces the product collector may be provided with a groove or recess that is adapted so as to enable the transport unit's product holder to be brought into abutment in the groove. The product collector is further arranged so as to be capable of being passed between different positions, preferably in the vertical direction, the product collector being equipped with a feed device, such as a linear actuator, and perhaps also a motor.

In connection with the first embodiment of the delivery unit, the product collector is arranged at the storage unit's delivery opening in such a manner that the product collector is placed in the box structure's cavity between the storage unit's abutment portion and one wall of the box structure. According to this embodiment the storage unit's coolants will keep the product cooled in the product collector when the product is kept inside the box structure's cavity.

In connection with the second embodiment of the storage unit, where the storage unit also comprises a box structure, the product collector may be placed in the box structure's cavity between the storage unit's abutment portion and one wall of the box structure, in the same way as that described in connection with the first embodiment of the invention. Where the storage unit is placed inside a cold room, the product collector may be positioned at the storage unit's delivery opening inside the cold room, thus keeping the product cool while it is located in the product collector. If the product collector is placed outside the cold room, it will be necessary to provide elements around the product collector that ensure that the products are kept cooled.

The product collector cooperates with the storage unit by the product collector closing and opening the storage unit's delivery opening, thereby determining whether products are to be delivered to the product collector. In one position, for example an upper position, the product collector or possibly one of the product collector's side walls close off one the storage unit's delivery opening, thus preventing the product from being discharged through the delivery opening. In a second position, for example a lower position, the delivery opening is opened and on account of the inclination of the supporting device and the weight of the products, the products are discharged through the delivery opening and into abutment in the product collector.

In a preferred embodiment of the product collector, the upper portion is designed, for example, with two support surfaces that are facing each other and tilted so that both support surfaces slope in towards the middle of the product collector. On delivery through the delivery opening, the product will be brought into abutment against these support surfaces, thus being oriented on these support surfaces in the same position as that in which it will be located during transport by the transport unit in the system, for example in a horizontal position if the product is a bottle or a mineral water can.

After the product has been transferred from the storage unit to the product collector's support surfaces when the product collector is located in the lower position, the product collector can be moved upwards to an intermediate position where the product collector closes off the delivery opening. In this intermediate position the product collector is still located inside the storage unit's cold zone or alternatively a cover may be provided around the product which ensures that the product is kept cooled at least to the temperature it had when it was discharged through the delivery opening.

When the product is placed on the product collector's support surfaces, the transport unit's product holder, or preferably the product holder's contact surface which has a supporting function for the product to be transported in the product holder, is positioned under the product in the groove provided between the support surfaces. The product collector is then lowered and the product holder's contact surface provides support of the surface or surfaces of the product that are facing the product collector's support surfaces. The product is released from the product collector's support surfaces by means of the product collector's further movement downwards, thereby transferring the product to the product holder.

When a product is required from the storage unit concerned, the product collector may be moved, for example, to an upper position where the transport unit's product holder, or its contact surface can be inserted into the product collector's groove under the product. The product collector is then lowered, thus transferring the product to abutment in the transport unit's holder and it can be further lowered therefrom either to an intermediate position where the product collector continues to close off the delivery opening or to a lower position where a new product can be discharged through the delivery opening to abutment in the product collector.

In a preferred application the product collector is moved to the intermediate position after the product has been delivered to the product collector in a lower position. When the transport unit arrives at the storage unit concerned, the product collector is moved from the intermediate position to the upper position, thus enabling the transport unit's product holder to be positioned below the product in accordance with the above description, and the product to be delivered to the product holder by lowering of the product collector. Since the product collector is moved from the intermediate position to the upper position and not directly from the lower position to the upper position, the transport unit avoids an unnecessary wait and an efficient utilisation of the system is achieved.

The product collector may, for example, be equipped with a sensor, for example a switch, which registers whether a product has been placed in the product collector. When the product is removed from the product collector, on the basis of the registered sensor signals, the product collector will be moved to the lower position where a new product can be passed through the delivery opening to the product collector. Alternatively, the product collector may be equipped with a sensor which registers whether the transport unit's product holder is in position in the product collector's recess. If so, on the basis of these sensor signals, the product collector will be moved to a lower position and a new product will be discharged through the delivery opening. Before delivery of the product to the transport unit, the product collector may be retained in this lower position where the conditions are arranged so as to keep the product at an even, cooled temperature. Alternatively, the product collector with the product may be moved to an intermediate position, where the product holder closes off the delivery opening. This will lead to time saving in the system since the product collector will be able to move the product more quickly to the upper position for delivery. In both these cases the product's temperature will be kept at an even level by suitable means, either by means of the depot's own cooling system or by the use of a cover or the like.

After all the products in a product layer have been discharged through the storage unit's delivery opening to the product collector, the sensor mounted in the product collector will register that the product collector does not contain a product; i.e. products are not being transferred from the depot to the product collector. As a result of these registrations, the supporting device or the lifting device will pass a batch of products representing the entire or parts of the storage unit's stock upwards along the storage unit's abutment portion until the next product layer is positioned at the delivery opening and a product can be transferred to the product collector. Alternatively, the storage unit may be equipped with a sensor, such as a photocell, at the delivery opening which registers when the storage unit is empty.

The storage unit may be organised in such a manner that the supporting device according to the first embodiment and the lifting device according to the second embodiment respectively are moved right up to the top of the storage unit when the devices are emptied of products. A sensor mounted in the storage unit's upper portion will register the devices' position and inform the system that the stock is empty.

After delivery of the product from the product collector to the transport unit, the product with the transport unit continue in the system via units such as, for example, the product rotator until it reaches the transfer unit. The transport unit and the relevant storage unit receive information on which product has to be delivered to the transfer unit. The function of the transfer unit is to transfer the products to the area where the product has to be made accessible for dispensing to the consumer, for example a counter where customers are served. In addition the products stored in the transfer unit act as a buffer stock, since the size and shape of the transfer unit permit temporary storage of products. The transfer unit's capacity with regard to the number of products that can be stored in the transfer unit should be of such a size that it is possible to supply a queue of customers at the customer service counter with products without the need to supply new products from the storage unit. It will therefore be necessary to adapt the transfer unit's storage capacity to the anticipated shopping pattern in the shop premises depending on various factors such as type of shop, geographical location, etc.

The transport unit is connected to a track system that connects the system's various units and ensures the flow of products from the stock depot to the products' delivery area. The track system may preferably be mounted at ceiling height or at least in such a manner that there is a difference in level between the area where the product has to be dispensed to the user and the transport unit's product holder.

It has therefore been necessary to provide a transfer unit where a smooth and safe transfer of products can be implemented between the area where the product is delivered from the transport unit's product holder and the area where the product has to be dispensed, for example to a customer, where account is taken of the fact that these two areas are displaced relative to each other in the vertical direction and/or the horizontal direction.

### Product rotator

The product rotator is a device that is intended to rotate a product until it assumes a desired position. The product rotator cooperates with the transport unit's product holder so that the further transport from the product rotator is conducted with the product in the desired position. This position may, e.g., be adapted so that the position assumed by the product when it is located in the transfer unit is such that important product information or the product name/label on the product is visible.

The product rotator comprises roller devices and a reading unit.

The roller devices will preferably be rollers, but may also be, e.g., balls or other devices suitable for rotating a product. The product is placed on the roller devices and rotated into the desired position.

The reading unit comprises means for obtaining information about the optical characteristic of the product and for processing and/or storing the information. Use is preferably made of photodiodes and photosensors, but imaging units may also be employed such as, e.g., a CCD chip or the like. The reading unit is preferably placed at the side of the roller devices at a height that enables it to read an area in the middle of the product when the latter is placed on the roller devices. It may, however, also be placed between the roller devices, or in another appropriate position.

In a preferred embodiment the reading unit comprises groups consisting of a light diode and three photodiodes, where the photodiodes are located slightly displaced relative to one another. The number of groups and number of diodes in each group may be adapted to suit the various products for which the unit has to be used. For products with simple patterns, it will be possible to employ fewer components and thereby fewer calculation steps and a shorter processing time. The light diodes transmit light towards the product. The surface of the product will be coated with a pattern, generally in several colours, where the different parts of the pattern/colours will have different reflectivity. The photodiodes register what proportion of the transmitted light is reflected back from the product, and on the basis thereof a reflection characteristic is created for this specific product. By arranging the groups of light diodes and photodiodes one after another, parallel to the product's longitudinal length, the same-number of characteristics as number of groups will be obtained.

The reading unit has a memory unit, preferably an EEPROM, in which are located prestored characteristics of the different product types to be used in the system. These prestored characteristics may, e.g., have been previously measured by the product rotator or by another similar device, which may be slightly simpler in design. These prestored characteristics may also be received from external sources, e.g. via a diskette, a CD or the like, or via a network or other data transfer.

The product rotator receives a message from a central control unit concerning which product type has to be rotated, e.g. in the form of a reference to the relevant stored characteristic, and compares the measured characteristics with the relevant prestored characteristic. The roller devices rotate the product a certain number of degrees, depending on the product pattern's complexity, preferably 360° for a product with a complex pattern, and register the characteristic by means of a specific number of measuring points through the rotation. The reading unit further comprises a processing device where each of these registered characteristics is compared with one or more of the prestored characteristics, and where the best correlation is obtained, the position of the product is assumed to be known. The system then calculates how many steps (corresponding to the measuring points) the product must be rotated in order to attain the desired position.

Alternatively, the read characteristic may be compared with all the prestored characteristics, thereby recognising which product is located in the product rotator, and avoiding the step of transmitting signals from the control unit to the product rotator. The positioning will thus be undertaken on the basis of the recognised product.

In a preferred embodiment the product rotator comprises an expulsion device. The expulsion device works, e.g., by one of the roller devices being in a fixed position while another can be tilted outwards. When one roller device is tilted outwards, the product falls down and can be collected in a suitable container.

Where the correlation between measured and prestored characteristic does not satisfy a predetermined threshold value, e.g. due to breakage, because the product is of the wrong type, a label is spoiled or the product is lying the wrong way, it will be possible to remove the product from the system by means of the expulsion device, or alternatively the product may retain its undefined position.

The product rotator may further comprise additional devices for product control, such as a weight for checking that the product has the correct mass, or devices for optical control of the contents of the product where the product is made of a transparent material.

When the product rotator is employed in the said system in order to achieve an automatic feeding of products from an area for storing a stock of goods to a delivery area, the product that has to be rotated is transported to the product rotator by the transport unit. The transport unit places the product over the product rotator, and in a preferred embodiment at least one of the product rotator's roller devices will be raised so that the product comes into abutment against the roller devices and is lifted free of the transport unit's product holder, thus enabling it to rotate freely. When the product has been rotated to the desired position, the product rotator is lowered again with the result that the product is again resting in the transport unit's product holder.

When it is a part of the system, the product rotator will preferably also comprise an electromagnet, optical transmitter/receiver, or other type of signal transmission device for communication with the transport unit. By means of the signal transmission device the product rotator informs the transport unit in which direction it should travel, depending on the result of the evaluation of the product's characteristic.

The product rotator's processing device may also be adapted to be able to count the number of products of each type, number of rejected products, number of products of the wrong type, number of products with breakage or the like, and comprise means for transmitting this information to a central control unit for statistical purposes.

### Transfer unit and transfer from the transport unit to the transfer unit

The transfer unit comprises one or more tracks, where each track preferably contains one type of product, but a solution may also be envisaged where the different product types are mixed in each individual track or where several tracks contain the same type of product. The number of tracks may be varied depending on how great a capacity it is desirable for the system to have, and/or how many different types of products have to be distributed in the system.

The tracks are designed with an entry portion, for example in the form of entry openings for feeding products into the transfer unit. There may be a common entry portion for all the tracks or the transfer unit may be designed with an entry portion for each track. The tracks lead into a delivery portion where the product is dispensed to the user or customer. Since the entry portion will preferably be located at the same height as the track system, i.e. at ceiling height, there will therefore be a difference in level between the transfer unit's entry portion and delivery portion.

In the transfer unit each of the separate tracks is composed of a horizontally oriented track and a succeeding vertically oriented track. The products are passed in the transfer unit firstly along the horizontal track and subsequently along the succeeding vertical track.

The horizontal track is composed of a horizontally oriented feed device preferably a conveyor belt which is arranged around at least two roller devices, where at least one of the roller devices may have propulsion means. The conveyor belt may be made of a material with good frictional properties, thus keeping the products in a stable condition during transport on the conveyor belt.

The succeeding vertical track is composed of a vertically oriented feed device, preferably a conveyor belt which is arranged around at least two roller devices, where at least one of the roller devices has propulsion means. In an embodiment of the transfer unit there may be a common roller device with propulsion for both the horizontal and vertical feed devices. The vertical feed device is designed with carriers such as lugs, which help to support the product during the vertical transport to the delivery area. The supporting carriers are mounted at intervals corresponding at least to the size of the product to be transported in the system.

The individual vertical feed device may be arranged in a channel such as, for example, a tubular structure made of a transparent material, where the tube may, for example, have a circular, oval or square cross section or any other shape the specialist decides is desirable. Alternatively, several vertical feed devices may be covered by a common cover, which may be removable and may well be transparent. The tubes or the cover may have double walls, thus providing thermal insulation of the interior of the tubes against the environment.

When in use, all the tracks in the transfer unit may be filled with products in such a manner that the products are displayed and have an eye-catching effect for sales advertising purposes. At the outlet or lower end of the vertical feed device the products are made accessible for delivery at the delivery portion which, for example, may be arranged in connection with a customer service counter.

The delivery portion may, for example, be in the form of an opening in the vertical channel or the lower portion of the track. The opening is adapted to the size and shape of the product that has to be delivered. The channel or track may be terminated some distance above the base, thus forming an area for collection of the lowest product in the track.

The product located at the bottom of the channel may be held in position for delivery by resting on one of the vertical feed device's carriers. Alternatively, the product may be transferred from the vertical feed device's carriers to a base immediately below the end of the channel, where the base may, for example, be composed of the customer service counter or a structure that is specially adapted for receiving the product, where the structure may be designed in such a manner that it can collect liquid from products that are leaking. When the bottom product is removed from the delivery portion, the vertical feed device will feed the next product to the delivery position.

The following description of the transfer of a product from the transport unit to the transfer unit is based on the fact that the product is transported in its horizontal position in the transport unit's product holder, and that it will be further transported in the transfer unit in a vertical position. This product may, for example, be a bottle or a mineral water can. The product is restored to its vertical position on account of the further transport in the transfer unit. In the transfer unit the product should be displayed in the tracks in an advantageous manner, and it is particularly important that the label should be displayed so as to be readable. It is also important for the products to be delivered in a position that is favourable for the receiver (customer). For some products such as bottles and cans it will be desirable for delivery to be implemented in a vertical position.

If the design of the products that have to be transported in the system permits the products both to be transported in the product hanger in a horizontal position and to be transferred in the most practical manner to the transfer unit in a horizontal position, the system will also be capable of handling the transfer of such a product. Transfer from the horizontally oriented feed device to the vertically oriented feed device will involve a change in the position of the products, and the carriers on the vertically oriented feed device must therefore be adapted to support the products in a horizontal position. It will also be possible to adapt the transport unit and the product holder in such a manner that a product that is suitable for this can be transported in a vertical position. Furthermore, the product that has to be transferred in the system may be symmetrical about both its horizontal and vertical central axes or may be designed in another way, but in such a fashion that it is not necessary to change the product's position when it is moved from the transport unit's product holder into the transfer unit.

In a preferred embodiment, the product that has to be moved from the transport unit's product holder to the relevant track in the transfer unit is arranged in a horizontal position in the transport unit's product holder. On arrival at the transfer unit, the transport unit will stop, whereupon the transport unit's product holder is released with the result that the product holder is rotated around one of its attachment points and brought into a vertical position. This release of the transport unit's product holder may be initiated by a special unit, such as a microswitch, a physical obstacle or similar unit that can initiate movement. The release of the transport unit's product holder must take place in an area where there is room for the product holder to be brought into a vertical position. Alternatively, the transport unit may receive signals from a transmitter to the effect that the product holder with the product is to be brought into a vertical position where the transport unit is further equipped with means that permit an automatic release of the product holder from the transport unit. It will also be possible to utilise signals from the same or possibly an additional transmitter in order to effect the return of the product holder to abutment against the transport unit.

The physical obstacle or the transmitter may be located at the transfer unit. After the product holder has been brought into a vertical position, the transport unit will be positioned at the entry opening associated with the track where the product has to be delivered. This positioning at the correct track is undertaken on the basis of information received by the transport unit from the superior control unit.

At the entry portion of the tracks, inserting/feed devices are provided which convey the product from the product holder into the transfer unit. The inserting/feed device is rotatably mounted about an axis and by means of its rotational movement will push the product located in the product holder in through the entry opening of the relevant track. The system may be equipped with a number of inserting/feed devices corresponding to the number of tracks, or a inserting/feed device which is designed so as to be capable of pushing products into all the tracks. The inserting/feed device's rotational movement may be initiated in various ways. For example, a sensor may be provided in the track system at each track to which is connected a timer, and which on the basis of the registration that the transport unit has stopped for a given period of time, initiates rotational movement of the feed device. Alternatively, the individual track may receive information from the control unit concerning which track has to receive products and on this basis the feed device's rotational movement is initiated on the arrival of the transport unit at the individual track.

After the product has been delivered through the track's entry opening, during the transport unit's further travel along the track system, a second physical obstacle provided in connection with the track system, preferably after the first physical obstacle or transmitter, will ensure that the transport unit's product holder is again brought into abutment against the transport unit. The transport unit then continues along the track system towards the charging unit.

In an embodiment of the invention, these two physical obstacles or transmitters whose functions are to release the transport unit's product suspension and to return the suspension to abutment against the transport unit respectively may be combined into one physical obstacle which performs both of these functions. The first time the transport unit's suspension device is brought into contact with the physical obstacle, the latter will cause it to be released from the transport unit and the product holder to be brought into a vertical position. The next time the transport unit is in contact with the obstacle, the latter will cause the product holder to be returned to abutment against the transport unit.

If, for example, the physical obstacle is placed behind the transfer unit viewed in the transport unit's direction of travel along the track system, the transport unit will first move up to the obstacle, thus causing the suspension to be folded down, whereupon the transport unit will reverse to the correct track where the product is to be delivered. When the transport unit then passes the physical obstacle on its way to the charging unit after delivery, the product holder will be brought into abutment against the transport unit. It will of course also be possible to place the physical obstacle immediately in front of the transfer unit.

In addition, the transport unit may employ the physical obstacle/transmitter as a reference point for positioning the transport unit at the correct track. Moreover, the transport unit may also employ the physical obstacle for updating the information on the track system's design and distances to the different stopping places. Where two different physical obstacles/transmitters are employed, the transport unit may employ one of the obstacles, preferably the first physical obstacle as a reference point.

In an embodiment of the transfer unit one or more lock doors may be provided at the entry portion, which, for example, can only be pivoted inwards, i.e. towards the track. It is an object that the products should be placed as close off together as possible on the horizontally oriented feed device in order to fully utilise the transfer unit's storage capacity as a buffer store. When the products are delivered to the horizontally oriented feed device, the horizontally oriented feed device, for example the conveyor belt, will be travelling in a forward direction, i.e. inwards in the track, thus conveying the products inwards in the transfer unit. The horizontally oriented feed device also has the ability to reverse and when it is reversed the object is achieved that the products are tightly packed together, thus reducing the possibility of the products becoming unstable and overturning. This reversing with the products subsequently being tightly packed is made possible inter alia by the fact that the lock doors can only to be opened inwards in the transfer unit and the roller devices' rotational direction can be reversed.

Alternatively, a solenoid-controlled stopper may be mounted at the horizontally oriented feed device's transition to the vertically oriented feed device. The horizontally oriented feed device is driven in a forward direction, thus causing the products to become tightly packed against the stopper. The stopper can be retracted by activation of the solenoid when the horizontally oriented feed device is filled up or whenever this is desirable, thus providing free passage for the transfer of products to the vertically oriented feed device.

A sensor mounted in the area of the delivery portion registers when a product is removed. Where the product is resting on a base, a sensor which, for example, is pressure sensitive may be mounted in the base. If the products in the transfer unit are arranged in such a manner that each track contains a type of product, it will be possible on the basis of the sensors' registrations to transfer information to the storage unit concerning which type of product needs to be replenished in the transfer unit.

The transfer unit may be arranged with a system where, for example, cooled air from the depot is brought into circulation in the transfer unit, with the result that those products which at any time are located in the transfer unit are kept cooled. In addition, the transfer unit may be equipped with a separate cooling system, for example a Peltier cooler or other cooling system, which helps to keep the products cooled to a desired temperature.

In the delivery portion where the products are made accessible, for example, to a customer, the products on display will be exposed to heat from the environment. The cold air current flowing down through the tracks where the vertically oriented feed devices are arranged surrounds the products in the delivery portion in an annular fashion and will ensure that there is sufficient cooling to keep the products at an acceptable temperature level. The lock doors provided at the tracks' entry openings help to keep the temperature in the transfer unit at the desired level. A night cover may also be employed that is placed around the delivery opening at night in order to keep the cold airflow as separate as possible from the influence of heat from the environment.

The system comprises a central control unit that receives and transmits control signals and/or information signals to and from the individual units in the system, together with sensors and means for transmitting/receiving signals provided at the individual units in the system.

The central control unit acts as an exchange which receives, processes and transmits signals with messages to/from the individual independent units in the system. The units in the system are independent and are each programmed according to their specific tasks, with the result that the central control unit does not need to transmit working instructions, but only simple messages concerning events in the system.

The invention will now be described by means of embodiments of the invention with reference to the attached figures, in which:
Figure 1 is a schematic illustration of a principle drawing of the system.
Figure 2 is a flow chart of the system's control system.
Figure 3 a is a schematic illustration of a perspective view of an embodiment of a transport unit according to the invention.
Figure 3b is a schematic illustration of a front view of the transport unit in figure 3a.
Figure 3c is a schematic illustration of a side view of the transport unit in figure 3a.
Figure 3d is a schematic illustration of a view from above of the transport unit in figure 3a.
Figure 3e is a side view of a transport unit with a product placed in a product holder.
Figure 3f is a view from another side of the transport unit with product in figure 3e.
Figure 4 is a schematic view of the transport unit in figures 1a-d with the product holder in a vertical position.
Figure 5 illustrates a model of an embodiment of the transport unit according to the invention.
Figure 6a is a section through the rail track, rail suspension and cover illustrating an embodiment of the method of suspension for the rails along which the transport unit runs.
Figure 6b is a perspective view of a part of a rail track, rail suspension and cover for the embodiment illustrated in figure 6a.
Figure 6c illustrates a transport unit with product travelling along the rail track as illustrated in figures 6a and 6b.
Figure 7 is a flow chart for an initialisation sequence for initialising a control unit in the transport unit.
Figure 8 is a flow chart illustrating the steps for electrical charging of a transport unit in a charging unit.
Figure 9a is a schematic illustration of a front view of a first embodiment of a storage unit and a product collector, where a product is delivered from the storage unit to the product collector.
Figure 9b is a schematic illustration of a front view of a first embodiment of a storage unit corresponding to that illustrated in figure 9a, where the product collector has been moved to an intermediate position.
Figure 9c is a schematic illustration of a front view of a first embodiment of a storage unit and a product collector, corresponding to that illustrated in figures 9a and 9b, where the product collector has been moved to an upper position.
Figure 9d is a schematic illustration of a front view of a first embodiment of a storage unit and a product collector corresponding to that illustrated in figures 9a-9c, together with a transport unit where the product is delivered to the transport unit's product holder.
Figure 9e is a schematic illustration of front view of a first embodiment of a storage unit and a product collector corresponding to that illustrated in figures 9a-9d, where the product collector is arranged in an intermediate position after delivery of the product to the transport unit.
Figure 9f is a schematic illustration of a front view of a first embodiment of a storage unit and a product collector corresponding to that illustrated in figures 9a-9e, where the product collector is moved to a lower position where the product collector receives delivery of a new product from the storage unit.
Figures 9g-9l are schematic illustrations of front views of a procedure for replenishing an empty storage unit according to another version of a first embodiment of the storage unit.
Figure 10a is a perspective view of a second embodiment of the storage unit and the product holder.
Figure 10b is a schematic illustration of a side view from of a second embodiment of the storage unit and the product holder where these are arranged in a box structure.
Figures 10c-10d are schematic illustrations of a front view of the second embodiment of the storage unit as illustrated in figures 10a-10b, where the storage unit is arranged in the box structure.
Figure 11 is a flow chart for the storage unit.
Figure 12a is a principle drawing of an embodiment of the product rotator according to the invention in a lowered position.
Figure 12b is a principle drawing of an embodiment of the product rotator according to the invention in a raised position.
Figure 13 is a principle drawing of a second embodiment of the product rotator according to the invention, where one of the roller devices can be tilted up or down.
Figure 14 is a schematic illustration of the steps in the comparison procedure carried out in a processing device in a product rotator according to the invention.
Figure 15 is a flow chart illustrating the signal flow on cooperation between a product rotator and a transport unit according to the invention.
Figure 16a is a schematic perspective view of an embodiment of a transfer unit.
Figure 16b is a schematic principle drawing viewed from the side of an embodiment of the transfer unit.
Figure 16c illustrates the transfer unit's delivery portion viewed orthogonally to the view illustrated in figure 16b, where the figure illustrates release of the transport unit's product holder from the transport unit.
Figure 16d is a schematic principle drawing viewed from the side where products are moved from the transport unit's product holder into a delivery portion of the same transfer unit as that illustrated in figure 16a.
Figure 17 is a flow chart for the signal transmission conducted internally in the transfer unit and between the transfer unit and the control unit.

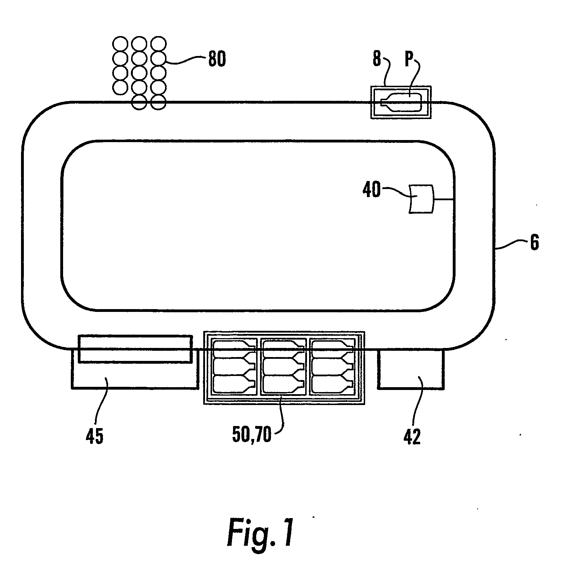

Figure 1 is a principle drawing of an embodiment of the system illustrating which units may form part of the system and the position of the units relative to one another. The system comprises at least one storage unit 50,70, one product rotator 42, one transfer unit 80, one charging unit 45 and one track system 6, which enables a transport unit 8 to convey the products P between these different units. A central control unit 40 is further included in the system for transmitting signals between the system's various units as illustrated on the innermost "track" in figure 1.

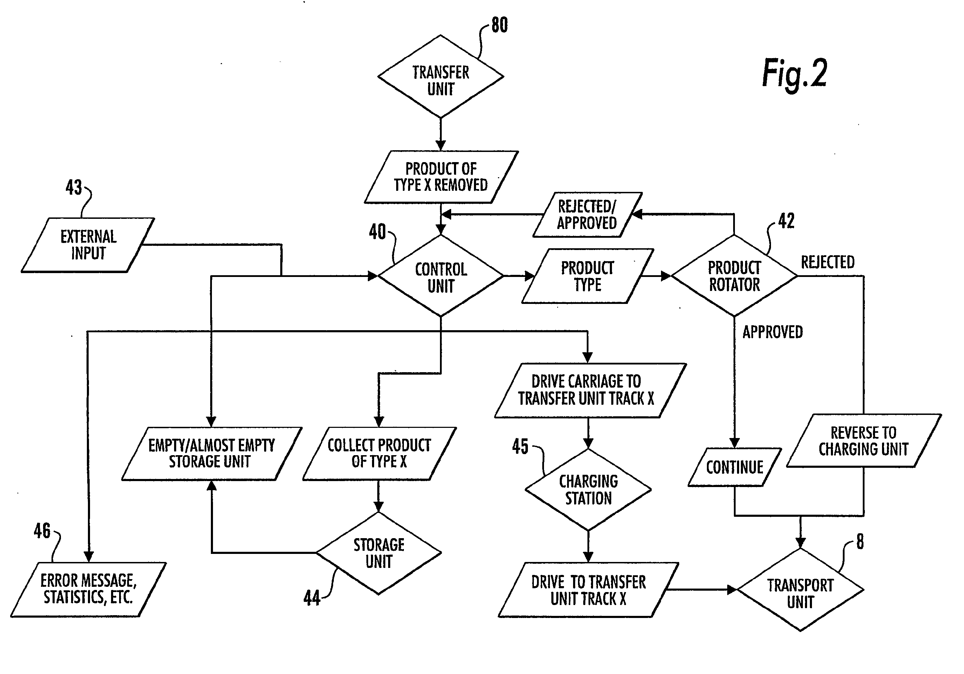

Figure 2 is a block diagram for control signals in a system. The control unit 40 receives a signal from the transfer unit 80 to the effect that a product of type x has been removed from the delivery portion. The control unit 40 then transmits a signal to the storage unit 44, the charging unit 45 and the product rotator 42 concerning the type of product that has to be supplied with the object of replacing the removed product with a similar product from the storage unit. The system's one or more transport unit(s) 8 are located at the charging unit 45 and are recharged/trickle charged when not in use. At the charging unit 45 the signal is retransmitted from the control unit to a transport unit 8, which then begins to run. The transport unit's own integrated control unit has information on how far and with how many stops the transport unit has to run and on where the stops have to depend on the type of product to be transported.

The transport unit 8 passes a storage unit 44 and receives a product from the storage unit on the way.

The storage unit 44 counts the number of products removed and may send an acknowledgement to the control unit 40 warning it about replenishment. Alternatively, this warning may be given by means of light signals directly on the wall of the depot.

The transport unit 8 then moves to the product rotator 42.

The product rotator 42 can also transmit control signals to the transport unit 8 without these passing through the control unit 40. These will be signals to the transport unit 8 to continue moving after the product has been rotated to the desired position, or signals to return to the charging unit 45 if the product has been rejected in the product rotator 42.

When the signal to the transport unit 8 gives instructions to continue moving, the transport unit 8 continues to the entry portion of the relevant track where a product was removed from the transfer unit 80.

The control unit 40 may also be adapted to issue information to the user such as error messages, statistics, a warning of the need for replenishment of the storage unit and the like. The control system may also have the capability for external input of data 43, e.g. the ability to input new characteristics for use by the product rotator, resetting of the system, different service modes and the like. Each unit in the system 80, 42, 44, 45, 8 preferably controls itself, with the result that the control unit 40 can be simple and only transmit signals between the units. It will also be possible for the control system to control the individual units by transmitting control signals to each unit.

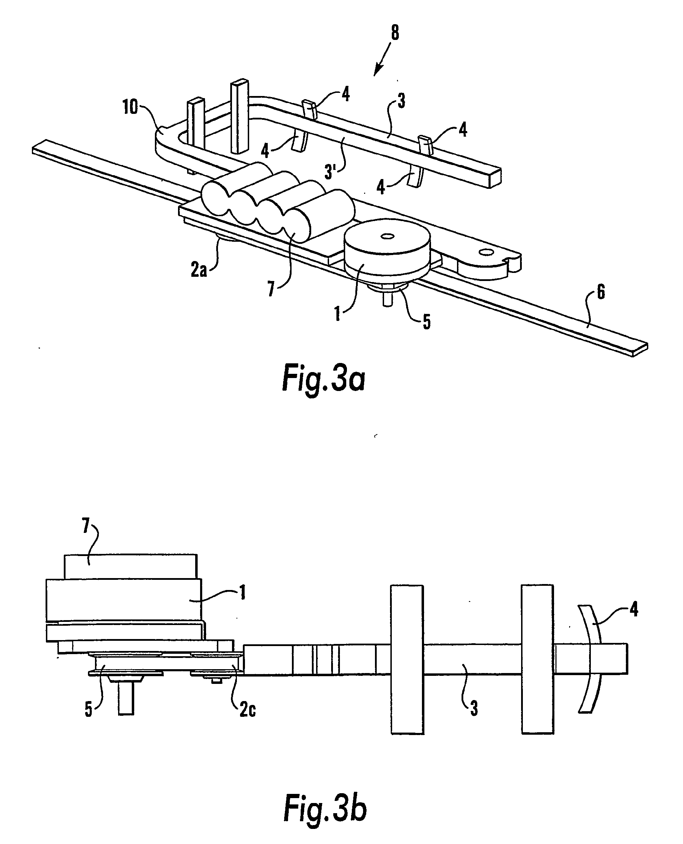

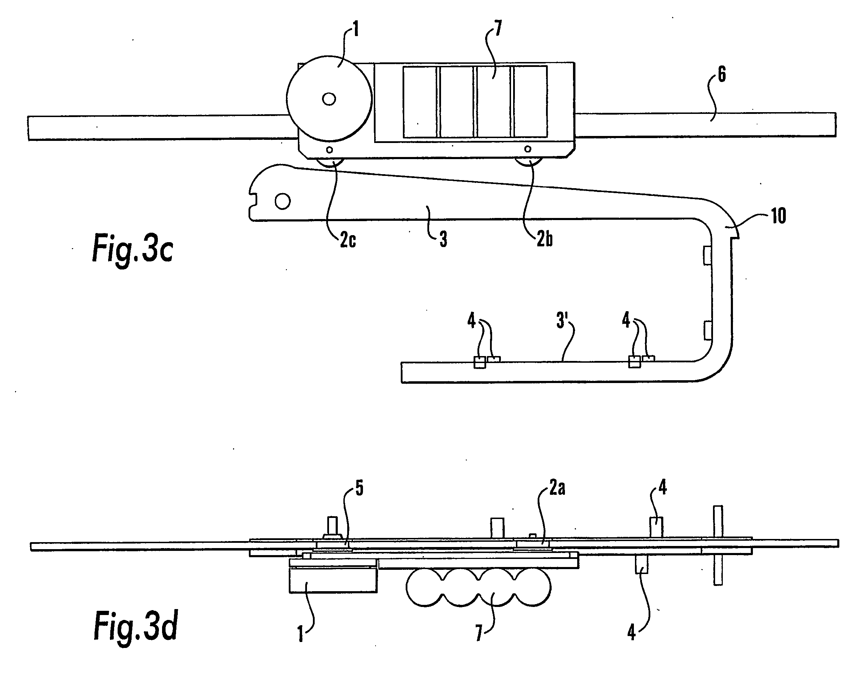

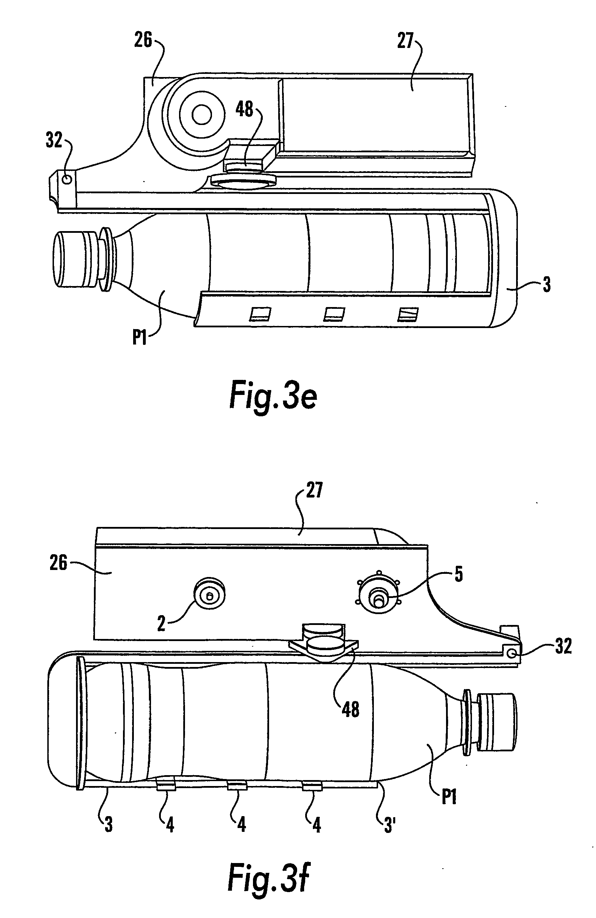

Figure 3 a is a perspective view of an embodiment of a transport unit 8 adapted for transporting a cylindrical product, such as mineral water bottles or cans. The transport unit has a motor 1 connected to a driving wheel 5 of the transport unit. The motor 1 receives its energy from energy storage units 7. The driving wheel and the transport unit's other wheels 2a, 2b, 2c run along a rail track 6. The rail track and the transport unit are so arranged that a product holder 3, which represents the most important part of the transport unit 8, is suspended on the underside of the transport unit. Support elements 4 and a contact surface 3' are arranged on the product holder 3 in such a manner that the product will remain steady while the transport unit is running.

Figure 3b is a view from in front of the same transport unit 8 as that illustrated in figure 3a. It is clearly illustrated here how the support elements 4 in this embodiment are designed to support a cylindrical product in the product holder, with the support elements 4 and the contact surface 3' forming a cradle in which the product can rest.

Figure 3c is a view from the side of the same transport unit 8 as in the two preceding figures. This illustrates in principle that the product holder is mounted suspended below the body of the transport unit with the product in a horizontal position. A projection 10 on the product holder is provided to interact with a suspension device (not shown), e.g. in the form of a hook, on the transport unit, thus securing the product holder in the horizontal position during transport.

Figure 3d is a view from above of the transport unit 8 in the above-illustrated embodiment. The driving wheel 5 and a second wheel 2a run along the top of the rail track 6, with the transport unit's body on the side of the rail track. As can be seen in figure 3c, a second wheel pair 2b, 2c runs along the underside of the rail track.

Figure 3e is a view from the side of an embodiment of a transport unit with a product P1 placed in a product holder 3. The motor 1, the energy storage units 7 illustrated in figures 3a-3d and other electronic components are provided in a housing 27, which is attached to a fixing plate 26. The product holder 3 is rotatably attached in a rotating attachment 32 in order to permit transfer of the product P1 from a horizontal to a vertical position.

Figure 3f is a view from the opposite side of the transport unit with product as illustrated in figure 3e. This embodiment comprises only two wheels 2, 5, where the front wheel 5 is the driving wheel connected to the motor mounted in the housing 27. In this embodiment the suspension device 48 is mounted on the bottom of the fixing plate 26 and the housing 27 in order to hold the product holder releasably in a horizontal position.

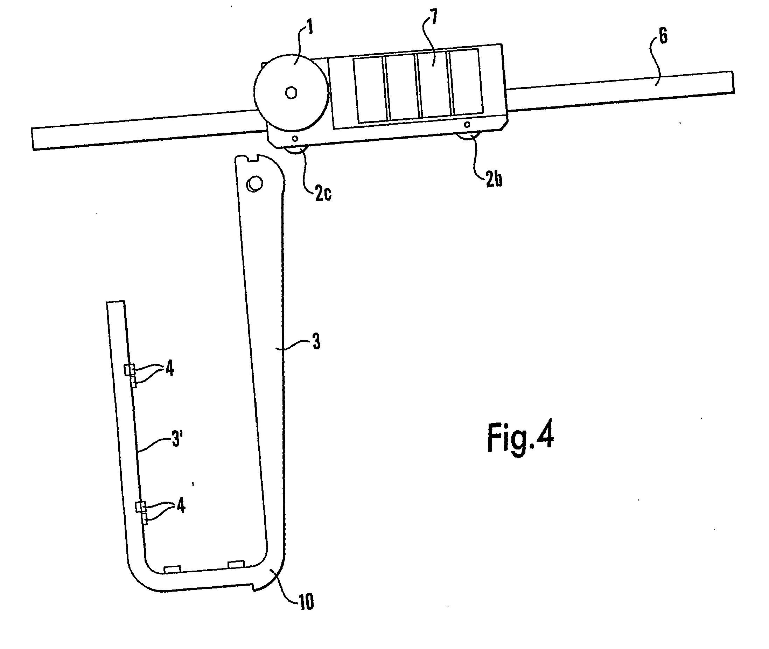

In these embodiments the product holder can be rotated down so that the product is transferred from a horizontal position to a vertical position, e.g. in connection with delivery to a transfer unit for supplying the product to a consumer. This is illustrated in figure 4. In order to move the product holder into the vertical position, the suspension device is released from the projection 10 on the product holder, e.g. by the suspension device meeting a physical obstacle.

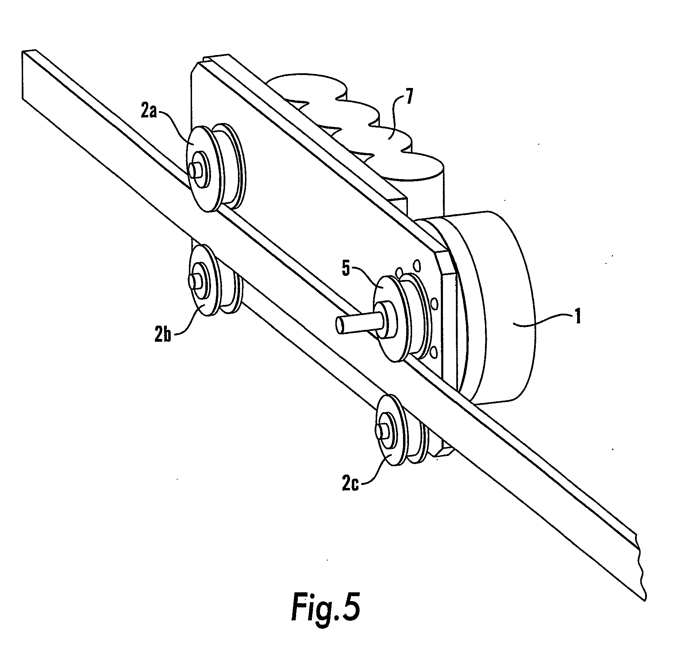

Figure 5 illustrates a model of a second embodiment of the transport unit with a possible positioning of the wheels, where 5 indicates the driving wheel connected to the motor 1 and the other wheels 2a, 2b and 2c run freely along the rail tracks. The wheels have a projecting edge in order to keep the transport unit safely on the rails.

The product holder is not illustrated in this model, but in the example illustrated above, it will preferably be mounted below the body of the transport unit.

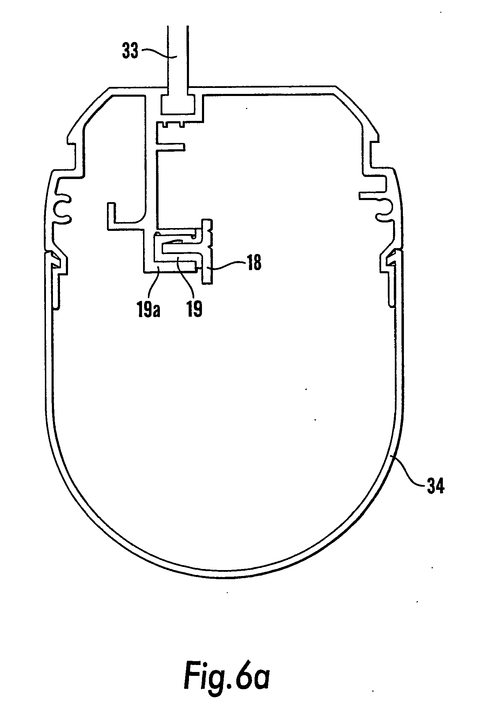

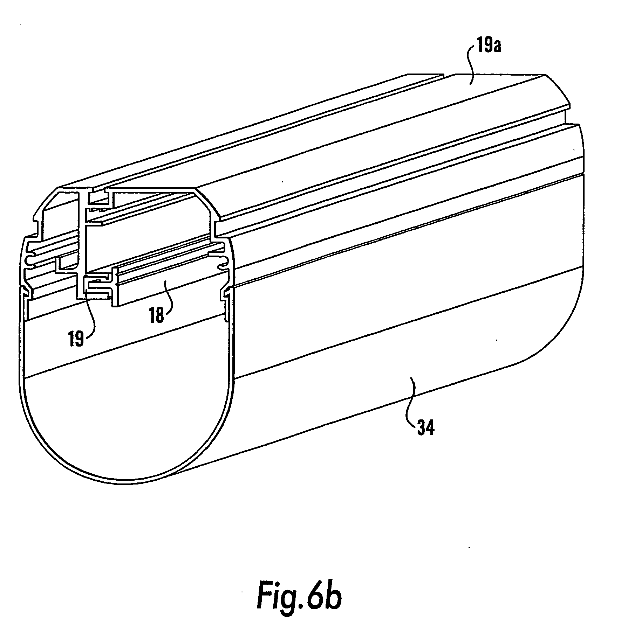

Figure 6a illustrates a section through the rail track, rail suspension and cover, and illustrates an embodiment of the method of suspension for the rail elements 18 forming the rail track along which the transport unit runs. The rail elements 18 are preferably made of aluminium and attached by clamping them into a rubber profile 19, which in turn is clamped into a suspension 19a. The suspension 19a is preferably attached to attachment devices 33, which in turn are attached to the ceiling, with the result that the rail track and thereby the transport carriage with the product are above the head height of people in the room. A cover 34 composed of several cover elements encloses the rail track and is attached by clamping it over the suspension 19a so that it is under tension. This enables a cover element to be easily removed if there is a need to gain access to the rail track at a specific location. The projections on the insides of the suspension's side areas are designed for locating signal cables or other necessary equipment.

Figure 6b is a perspective view of a part of a rail track, rail suspension and cover as illustrated in figure 6a.

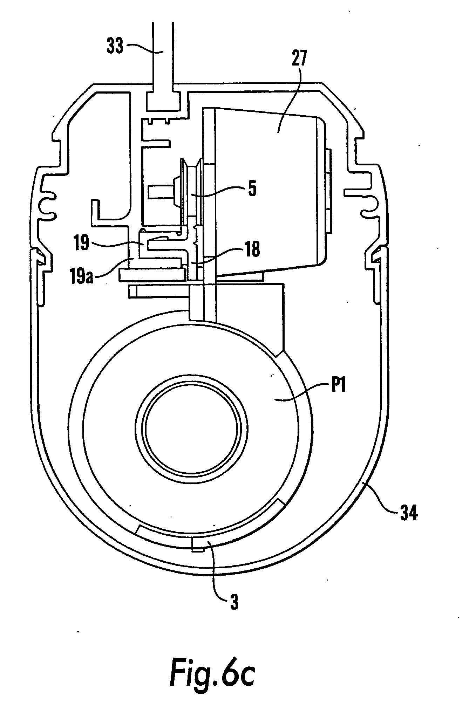

Figure 6c illustrates a transport unit with product P1 travelling along the rail track as illustrated in figures 6a and 6b. The transport unit's upper wheel 5 runs along the rail elements 18.

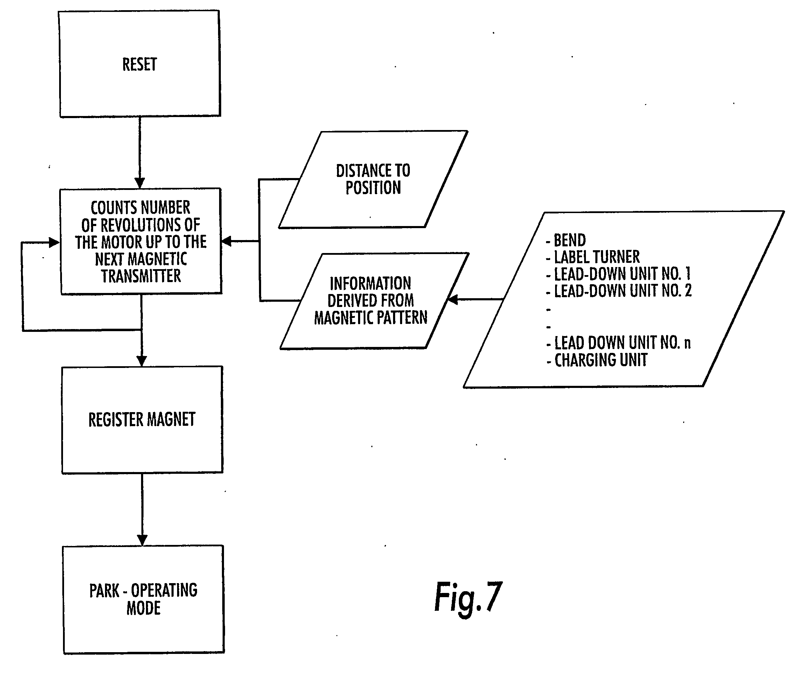

Figure 7 is a flow chart for an initialisation sequence for initialising a control unit in the transport unit. The system is reset before initial use and the transport unit then completes a circuit of the system. The control unit counts the number of revolutions of the motor until it registers a magnet, uses this number to calculate the distance it has travelled to this position and, based on the signal type from the magnetic transmitter, what this specific magnet represents. When the transport unit has completed a circuit, i.e. when it has registered all the magnetic transmitters in the system, it is parked and placed in operating mode.

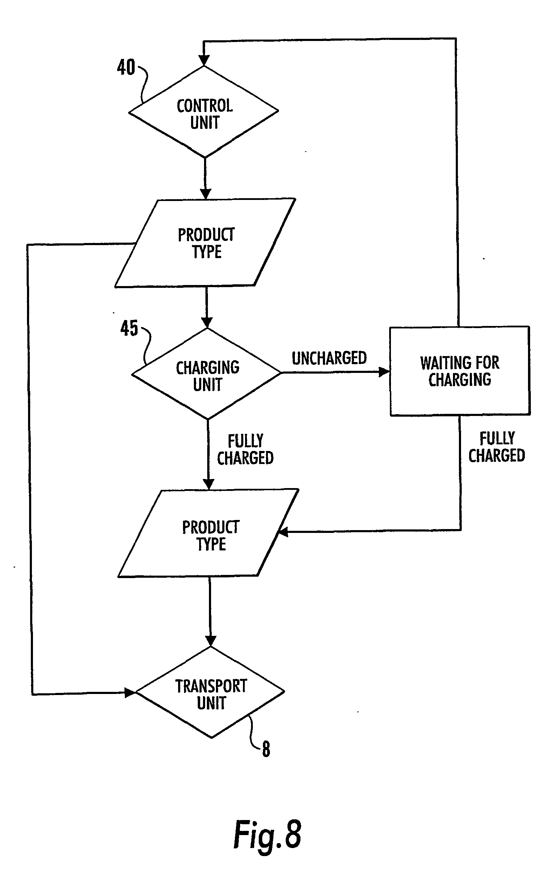

Figure 8 is a flow chart illustrating the steps for the electrical charging of a transport unit 8 in a charging unit. The transport unit 8 receives a message from the control unit 40 regarding which product type has to be supplied, either directly from the control unit 40 or via the charging unit 45. The charging unit checks whether the energy storage unit in the transport unit 8 is fully charged, and sends a reply to the control unit 40 regarding the charge level so that the control unit knows when the transport carriage 8 can begin to move.

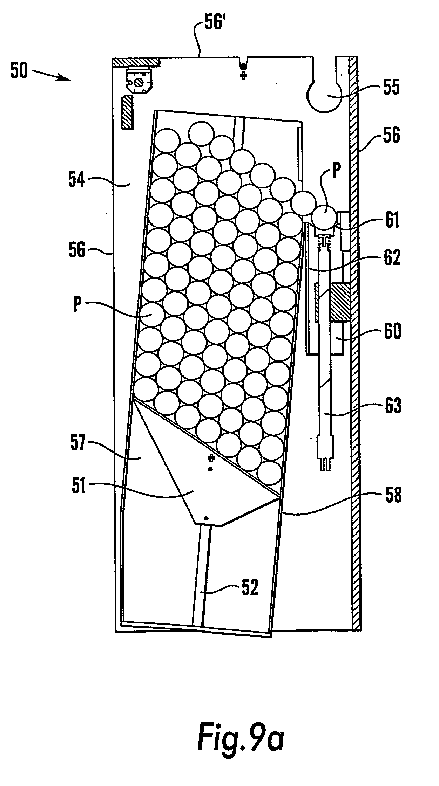

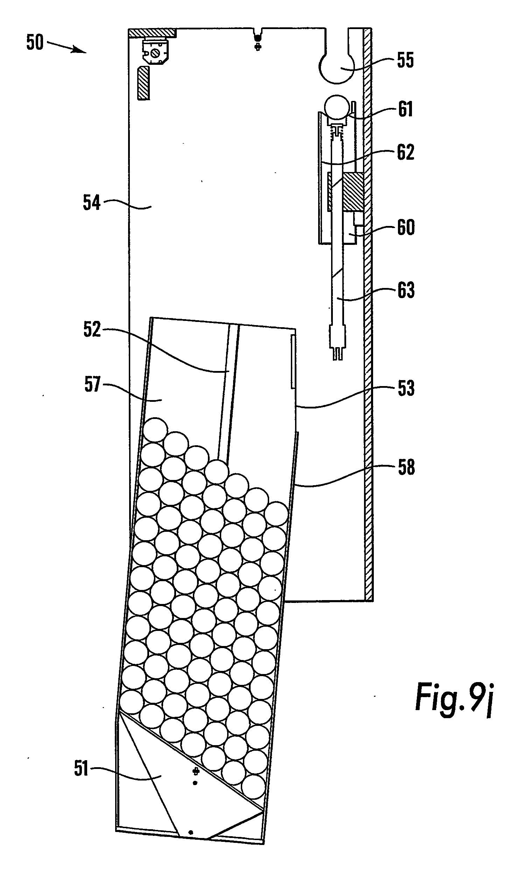

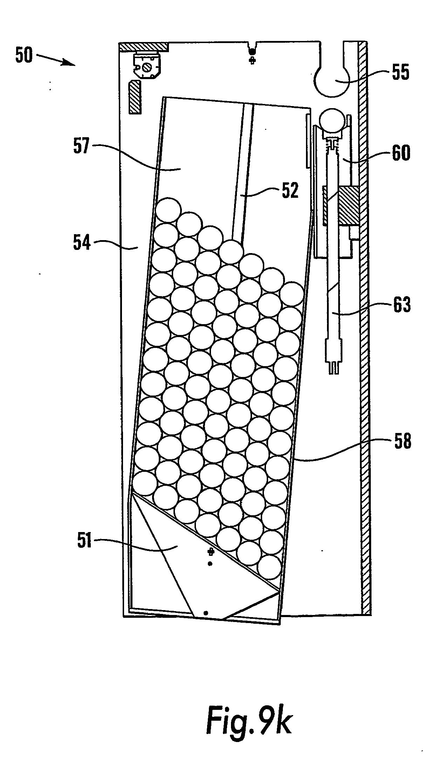

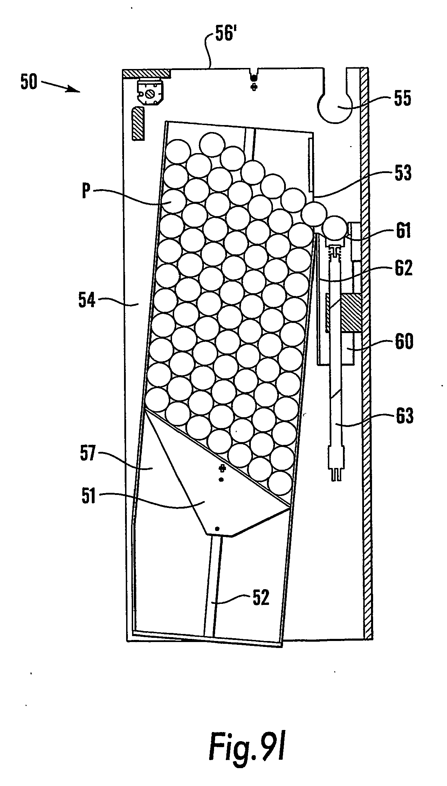

Figure 9a illustrates a first embodiment of the storage unit 50. The storage unit comprises at least one abutment portion 58, one delivery opening 53 and at least one supporting device 51.

In this first embodiment of the storage unit, it is composed of a depot 57, which in addition to the abutment portion 58 comprises two side portions that support the products to be placed in the depot 57. These side portions and the abutment portion 58 together form a cavity where the products are stored, while a third portion may be provided with a portion that can be opened and closed. The depot 57 may further be equipped with a bottom portion and ceiling portion and the depot 57 according to this first embodiment may further be mounted movably in a box structure 54. In the figure the box structure 54 is shown as a structure where three side portions 56 are fixed, while the fourth side portion can be opened. The box structure may be equipped with a ceiling structure 56', thus permitting a closed structure to be obtained. This is particularly important if the storage unit also has to act as a cold room. Moreover, the box structure 54 may alternatively be equipped with a bottom. In the embodiment illustrated here, the box structure 54 has no bottom. The storage unit 50 may be equipped with coolants so that both the depot 57 and the box structure 54 form part of the cooling zone. The depot 57 is further equipped with a supporting device 51, which can be raised and lowered in the depot 57 by means of a lift system 52. The storage unit's stock, which consists of products P, is illustrated stacked up in layers from the supporting device 51 in the cavity of the depot. The products illustrated in figure 9a are bottles or mineral water cans and it is the bottom of the products that is illustrated in figure 9a.

In figure 9a it can be seen that the depot's abutment portion 58 along with the entire depot 57 is arranged slantingly in the box structure. If the longitudinal axis of the storage unit's abutment portion 58 is oriented at an angle that deviates relative to the vertical axis, and this angle, for example, is of the magnitude of 0-20°, preferably 7-12°, so that the abutment portion slopes backwards as illustrated in the figure, the result is achieved that the stock is stable in the height direction.

In the same abutment portion 58 there is provided a delivery opening 53 where a product P1 from the upper product layer of the stock of goods can be delivered from the depot 57 to a product collector 60. The product collector 60 is mounted in the box structure 54 and can be moved between three different positions in the vertical direction and in figure 9a it is shown located at the delivery opening 53 in its lower position. When the product collector 60 is located in its lower position and in the intermediate position, the product is kept inside the storage device's cooling zone.

The inclination of the supporting device 51 is adapted so that the product is delivered through the delivery opening 53 in a controlled manner and is brought into abutment against the support surfaces 61 in the product collector's 60 upper portion. If the products in the storage unit 50 are bottles or mineral water cans, it has been shown that tilting of the supporting device 51 in order to form an angle of the magnitude of 30° between the supporting device's surface where the products are placed and a plane perpendicular to the abutment portion's longitudinal axis ensures a satisfactory delivery of products through the delivery opening.

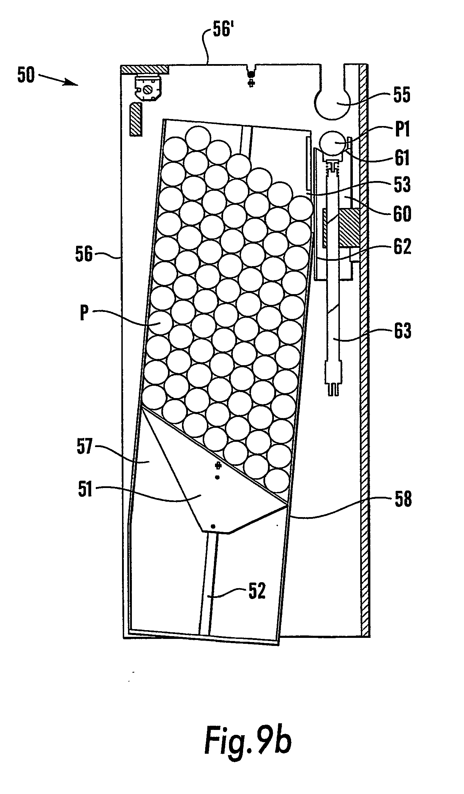

Figure 9b illustrates the same situation as in figure 9a, but here the product collector 60 is moved by means of a vertical movement to an intermediate position where the product P1 is still located inside the storage unit's 50 cooling zone. The product collector 60 is kept in this intermediate position until the product P1 is collected for further transport in the system. In this intermediate position one side wall 62 of the product collector closes off the delivery opening 53. The product collector is raised and lowered by a feed device 63, which may, for example, be an actuator.

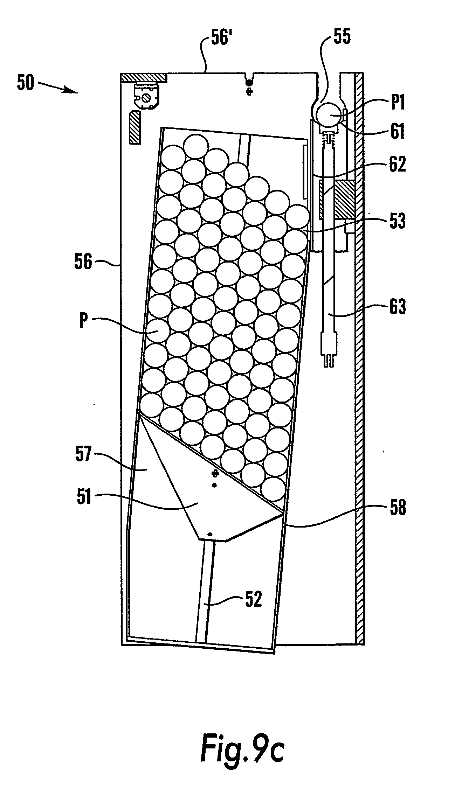

When the depot 57 or the storage unit 50 receives information that a product has to be collected by the transport unit 8 and conveyed to the transfer unit, the product collector 60 moves the product P1 to an upper position like that illustrated in figure 9c.

The product P1 is positioned here in a collection zone 55 which is provided in the box structure and is ready to be collected by the transport unit. In this collection zone 55 the product is located outside the storage unit's 50 cooling zone.

In an alternative embodiment of the invention the product collector 60 may pass the product directly from the lower position illustrated in figure 9a to the upper position illustrated in figure 9c, i.e. outside the intermediate position illustrated in figure 9b.

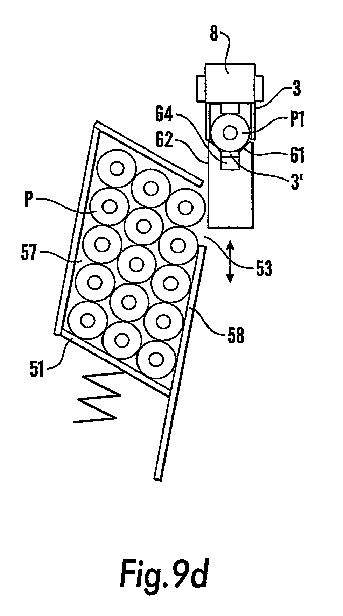

Figure 9d illustrates a principle drawing where the transport unit 8 is brought into position for collecting the product P1. In the figure the product collector 60 is illustrated while it is located in an upper position. The product collector 60 is designed with a groove or recess 64 between the support surfaces 61. The transport unit's product holder 3 is shown positioned in the groove 64 under the product P1, the product holder's contact surface 3' being placed under the product P1. When the product collector 60 is then lowered from this upper position, the product P 1 is transferred to the transport unit's product hanger 3 with the result that the product rests against the product holder's contact surface 3'. The product P1 is moved on in the track system by means of the transport unit 8 to the product rotator 42.

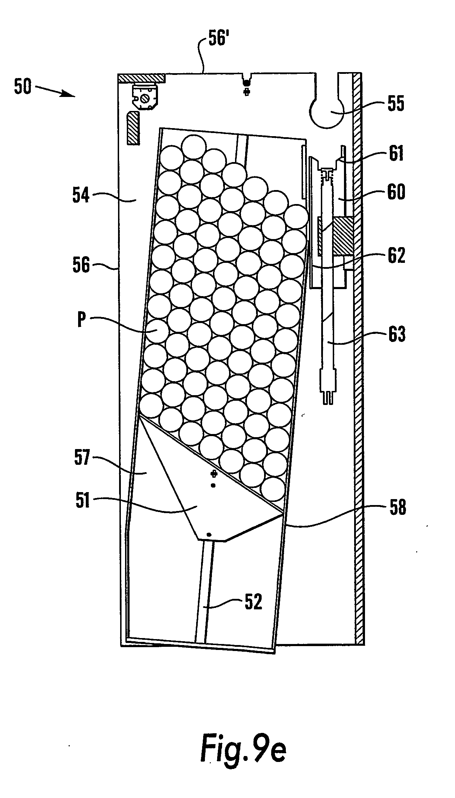

Figure 9e illustrates the product collector 60 in an intermediate position on its way down to the lower position after the product P1 has been delivered to the transport unit 8.

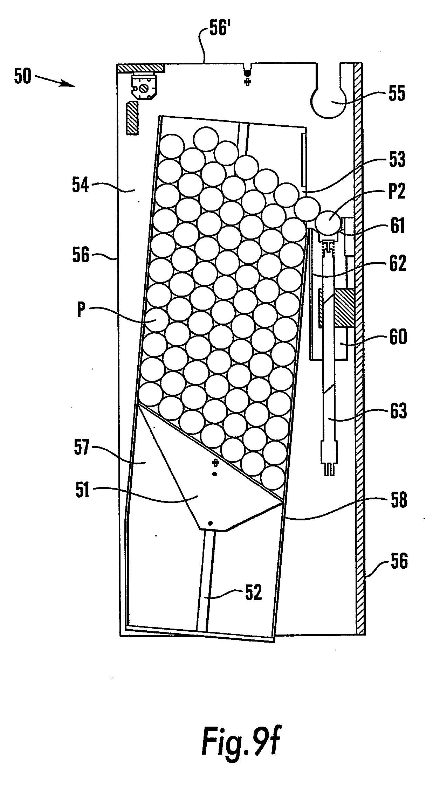

In figure 9f the product collector 60 is placed in the lower position. In the lower position a new product P2 is transferred to abut against the support surfaces 61 in the product collector 60. When all the products in the upper product layer have been delivered from the depot 57, the supporting device 51 will be moved upwards by means of the lift system 52, with the result that the next product layer is oriented for delivery at the delivery opening 53.

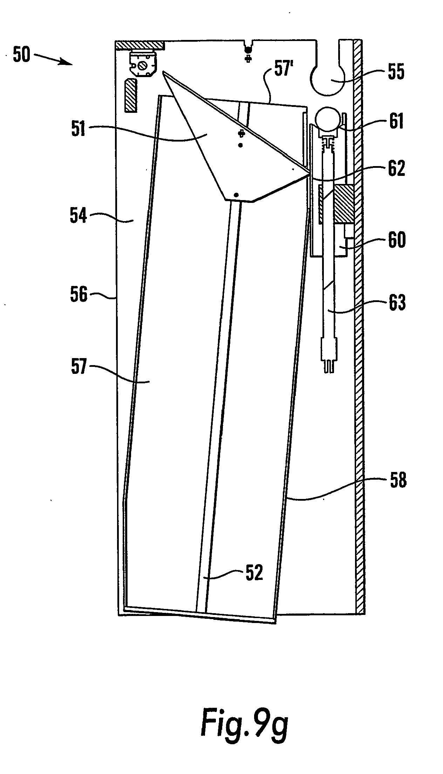

After all the products have been delivered from the depot 57, the bottom of the depot 51 is moved right up to the upper portion 57 of the depot as illustrated in figure 9g. In this upper portion 55 a sensor may be provided which registers that the bottom of the depot 51 has reached this upper position and it is registered that the depot 57 is completely empty and needs to be filled. A sensor may also be provided in an intermediate position in the depot's cavity indicating that the depot's stock is in the process of being emptied.

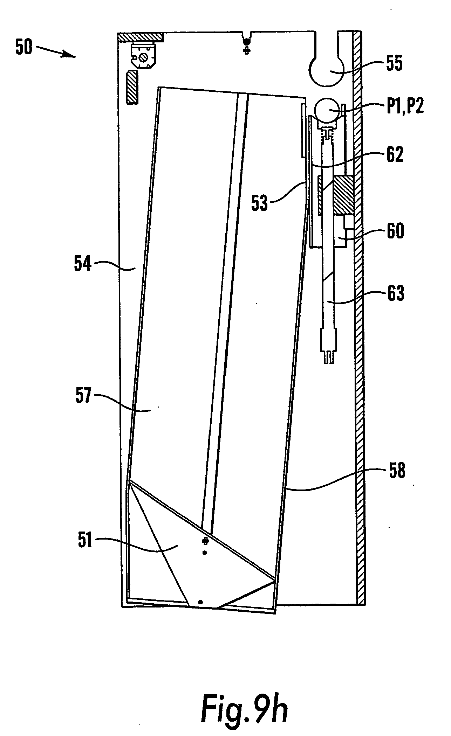

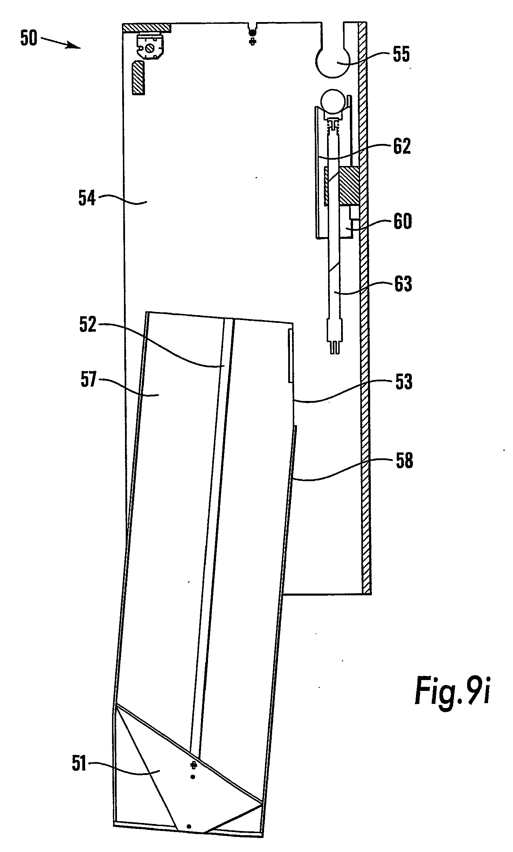

When filling the depot 57, the supporting device 51 is lowered by means of the lift system in the depot's 57 cavity to the depot's lower portion 56, as illustrated in figure 9h. The whole depot 57 is then lowered in the box structure 54 by means of the lift system 52, thus making the depot 57 accessible to personnel who have to fill the depot 57 with new products. This situation is illustrated in figure 9i, where it can be seen that the depot is removed from the box structure 54 for filling the depot.

In figure 9j the depot 57 is filled with new products P, and the depot 57 can now be raised in the box structure 54 until the delivery opening 53 reaches its position at the product collector 60. Figure 9k shows the depot 57 arranged in the box structure 54, where the delivery opening 53 is again oriented at the product collector 60.

After the depot 57 has been moved into position in the box structure 54, the supporting device 51 moves the stock upwards in the depot 57 by means of the lift system 52 until the top product layer is located at the delivery opening 53. A situation is thereby achieved like that illustrated in figure 9l.

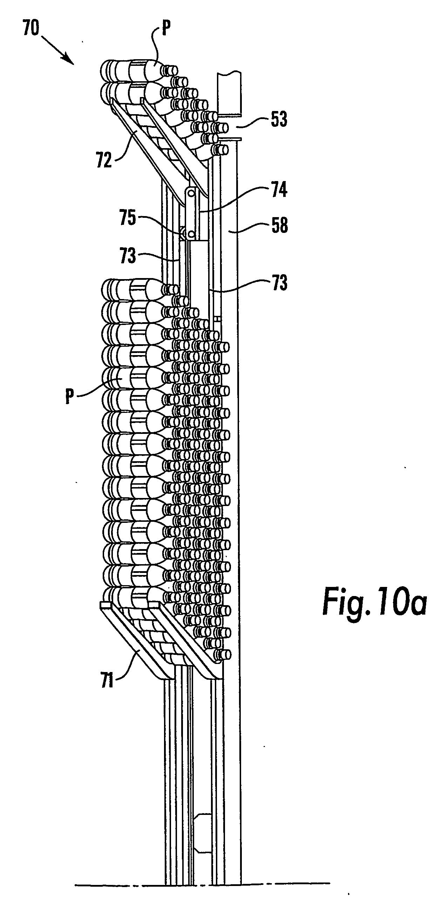

Figure 10a illustrates a second embodiment of the depot 70, where the supporting device 51 is provided by a support device 71 and a lifting device 72 for storing and feeding of products P respectively. Both the support device 71 and the lifting device 72 are, as illustrated in figure 10a, designed as fork devices with two arms. The support and lifting devices 71, 72 are attached projectingly to an abutment portion 58, which in figure 10a is designed as a rail system 73. The support device 71 is substantially fixed to the rail system 73, but may also be arranged movably along the rail system. The lifting device 72 is attached to a plate body 74, where the plate body 74 is equipped with movable devices, for example wheels 75, which are driven by a lift system, thus permitting movement along the rail system 73. The wheels 75 are provided movably in internal rails 76. The plate body 74 with the lifting devices 72 can therefore be moved along the rail system 73 as required.

Both the support device 71 and the lifting device 72 may be tilted so that an angle is formed between the surfaces of the supporting device and the lifting device respectively where the products are placed, and a plane perpendicular to the abutment portion's 58 longitudinal axis, this angle preferably being 30°.

When in use the lifting device 72 ensures that the products are conveyed into position at the delivery opening 53 (not shown in the figure) by the lifting devices 72 raising the products after the last product in the product layer, which is at the top at any time, has been delivered through the delivery opening. When all the products placed on the lifting devices 72 have been delivered, the lifting device 72 will be folded up, thus being positioned parallel with the rail system 73. The rail system 73 is designed in such a manner that there is room for the lifting device 72 to pass behind the support device's 71 attachment point 71' in a folded state. In this folded state the lifting device 72 can be moved down along the internal rails 76 to abutment under the support device 71.

When the lifting device 72 is positioned under the support device 71, the lifting device 72 is unfolded and then moved up to the support device 71 where the lifting device 72 is adapted so that in an unfolded state it can pass between the support device 71. When the support device passes, the stock located on the support device 71 is transferred to the lifting device 72. The lifting device 72 moves the stock on up the rail system 73 with the result that the top product layer is positioned at the delivery opening 53. The support device 71 will now be empty of products and ready to receive new stock.

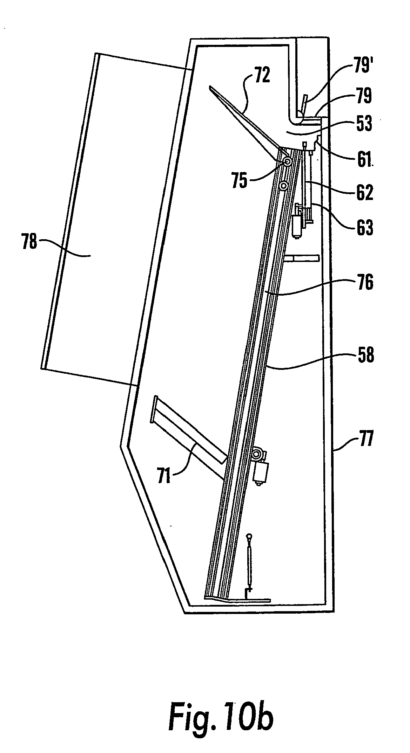

Figure 10b illustrates an embodiment of the storage unit 70 where the support devices 71 have three fork arms. Furthermore, the storage unit is arranged in a closed box structure 77, which is provided with a door 78 that ensures access to the storage unit 70. The product collector 60 is shown placed at the delivery opening 53 between the abutment portion 58 and one side wall of the box structure. The box structure 77 is further provided with an opening 79 where the product will be delivered to the transport unit when the product collector 60 is moved to its upper position. A hatch 79' may close off the opening 79 when the product collector is located in an intermediate position or the lower position, thus enabling the area within the walls of the box structure 77 to be kept cool.

In figure 10b it can be clearly seen that the storage unit's abutment portion 58 is tilted. The longitudinal axis of the storage unit's abutment portion 58 is oriented at an angle that deviates in the order of 0-20°, preferably 7-12° from the vertical axis. This inclination ensures that the stock is stable in the height direction.

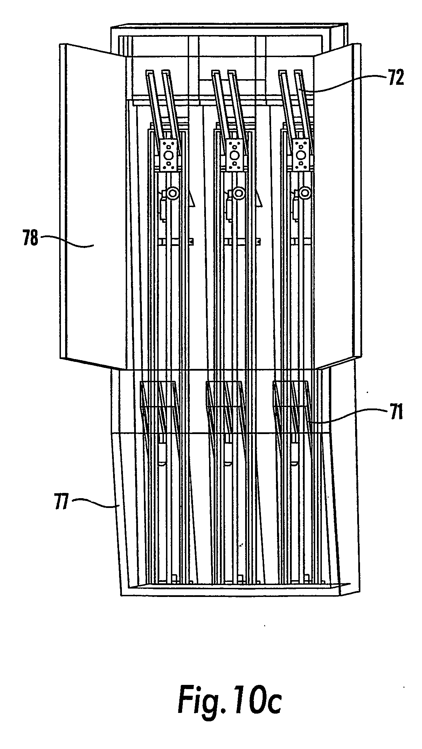

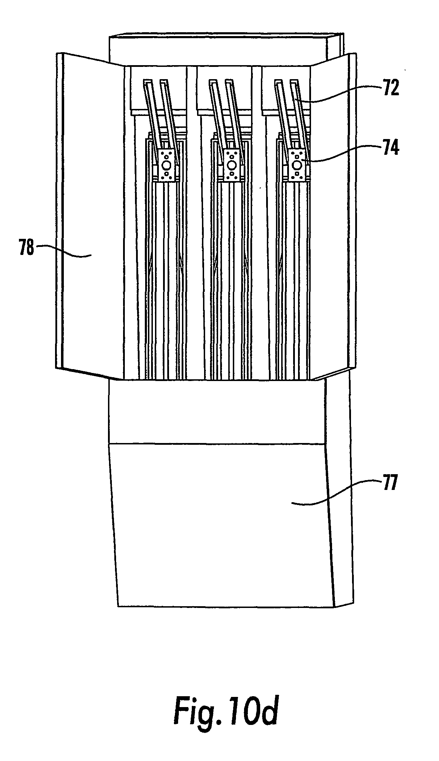

Figures 10c and 10d illustrate the same situation as in figure 10b, but with the storage unit arranged in the box structure 77 viewed from in front.

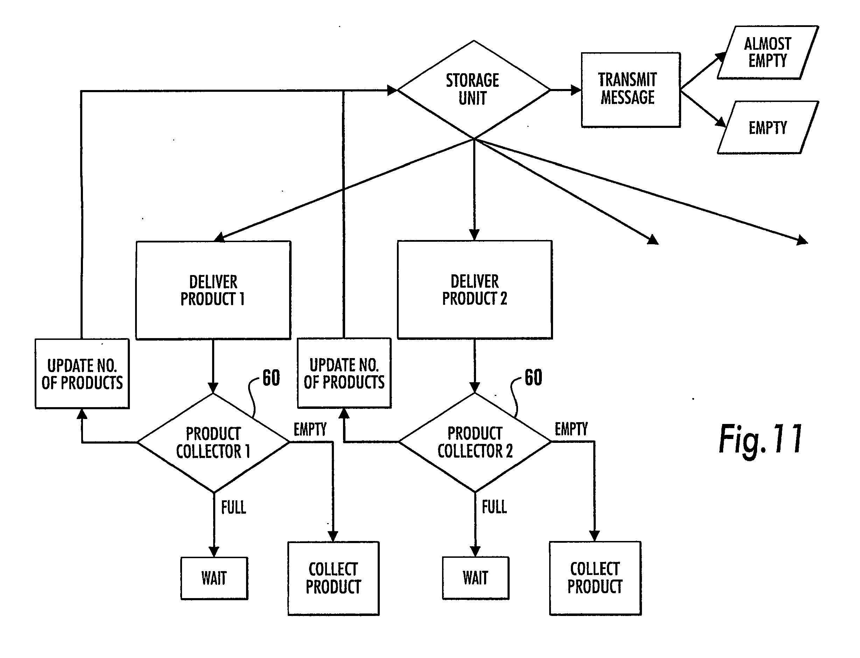

Figure 11 is a schematic overview of an example of the control of the storage unit 50, 70 and the product collector 60. The figure illustrates how the delivery of products from the storage unit 50, 70 is controlled, as well as updating of the storage unit when the transport unit 8 has collected a product from the product collector 60. It also illustrates the storage unit's communication with the rest of the system in order to signal whether the storage unit is empty or almost empty.

### Product rotator

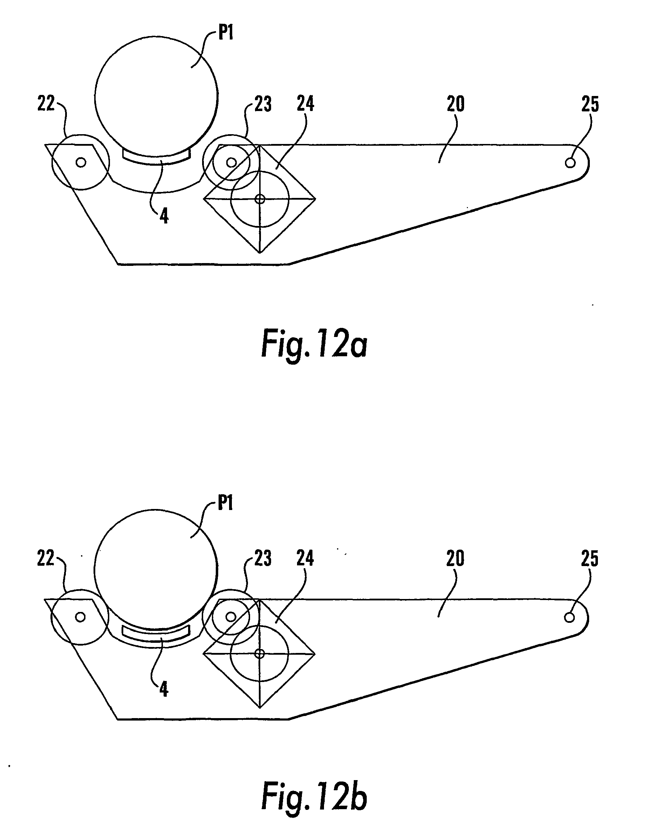

Figures 12a and 12b are a schematic illustration of an embodiment of the product rotator 42 in two different positions. The product rotator 42 comprises two roller devices 22 and 23 arranged in parallel in a holder 20. The holder 20 is rotatable about an axis of rotation 25 in one end, thus enabling the other end to be raised and lowered. The rollers 22 and 23 are driven by a motor 24, which is preferably attached to the outside of the holder 20. The motor 24 is preferably a step motor or other type of motor with a position transmitter, thus enabling the angle of rotation to be controlled.

A product P1 is transported to the product rotator 42 by a transport unit with a product holder 3 with support elements 4.

In figure 12a the product rotator is lowered, thus enabling the product P1 to be positioned over the rollers 22 and 23 of the transport unit with product holder 3. In figure 12b the product rotator is shown raised so that the rollers 22, 23 come into abutment against the product P 1 and the product is no longer in contact with the transport unit's product holder 4.

The product rotator 42 receives information from the central control unit 40 regarding which type of product has to be rotated, and thereby which characteristic in the memory unit has to be used as a reference. The product P1 is rotated a given angle by means of the rollers 22, 23 while the characteristic is measured by photodiodes seeing the light from a light diode reflected from the product P1. The product rotator's 42 processing unit performs a comparison of the measured characteristic and the reference characteristic and the product P1 is rotated on the basis thereof to the desired position.

When the product P1 has been rotated to the correct position, the product rotator is lowered again to the position illustrated in figure 12a, with the result that the product P1 once again rests on the transport unit's support elements 4 on the product holder 3 for further transport.

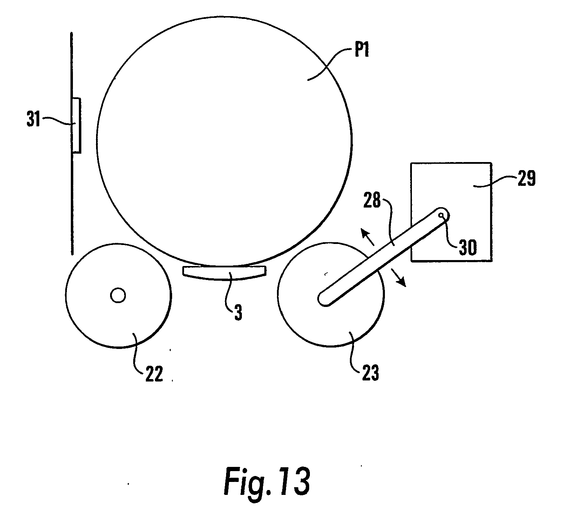

Figure 13 illustrates an alternative embodiment of the product rotator 42, where one roller 22 is fixed, while the other is mounted rotatably on an arm 28. The arm movement is operated by an additional motor 29, thus enabling the roller 23 to be moved up or down. The reading unit 31 is illustrated located on the side of the product P1, above the fixed roller 22. One of the rollers is driven by a motor (not shown) in order to make the product P 1 rotate.

When the product P 1 is placed over the product rotator 42 by means of the transport unit's product holder 3, the movable roller 23 is raised, with the result that the product P1 comes into abutment against the rollers. The product P 1 is read and rotated as described in the embodiment above, but if the comparison of measured characteristic and reference characteristic results in differences that are excessive, the product P1 is rejected by the transport unit 8 receiving signals telling it to reverse, and the movable roller 23 is lowered until the product falls out of the product rotator 42.

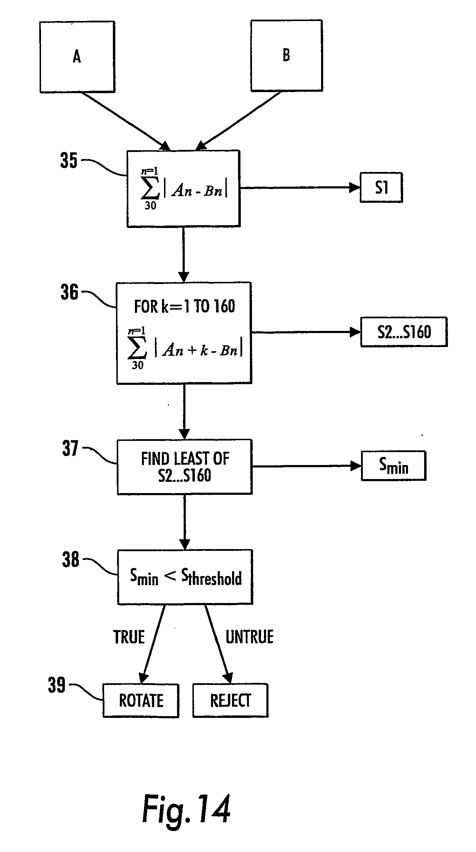

Figure 14 is a schematic illustration of the steps in the comparison of prestored and measured characteristics. The prestored characteristic is represented by the reference matrix A and the measured characteristic by the measurement matrix B. In the example, these matrices consist of 3x160 elements. In order to simplify the procedure, the first 30 elements in the measurement matrix are used in the comparison. In step 35 each of the first 30 elements in the measurement matrix B is subtracted from each of the first 30 elements in the reference matrix A. The sum of the absolute value of these differences is stored as sum S1.

Thereafter, in step 36 the matrices are moved relative to each other in such a manner that element no. 1 in the measurement matrix B is subtracted from element no. 2 in the reference matrix A. This is repeated 160 times with the result that the 30 elements in the measurement matrix B are compared with 30 elements in the reference matrix A. The sums of the absolute values of the differences are stored in the same way as in step 35 as sums S2 to S160.

In step 37 can be found the least sum of the sums S1 to S160, Sₘᵢₙ, corresponding to the best correlation. If this sum is less than a given, prestored threshold value, step 38, this is assumed to represent a known position. Based on the number of steps the two matrices were moved relative to each other in this sum (S2 - moved 1 step, S3 moved 2 steps, etc.), a calculation is made of how many steps the product should be rotated in order to attain the desired position. In step 39 the bottle is rotated to the desired position, or rejected if the least sum Sₘᵢₙ is greater than the threshold value.

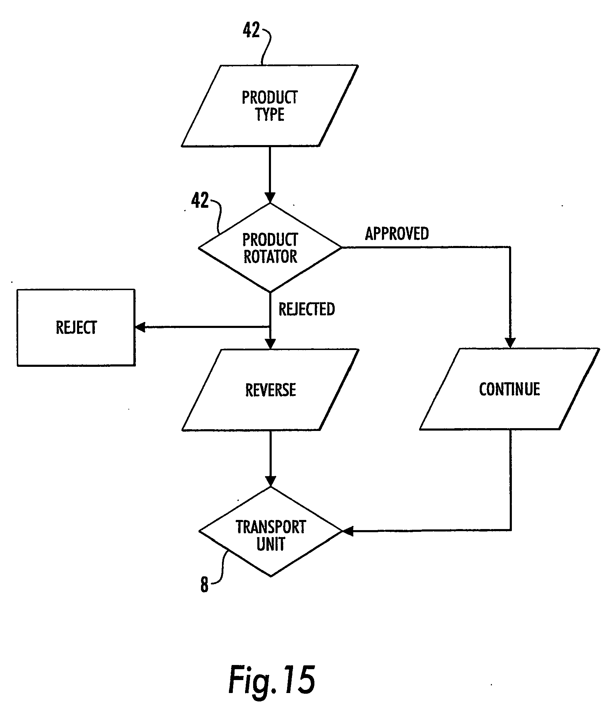

Figure 15 is a flow chart illustrating the signal flow on cooperation between a product rotator 42 and a transport unit 8 according to the invention.

### Transfer unit

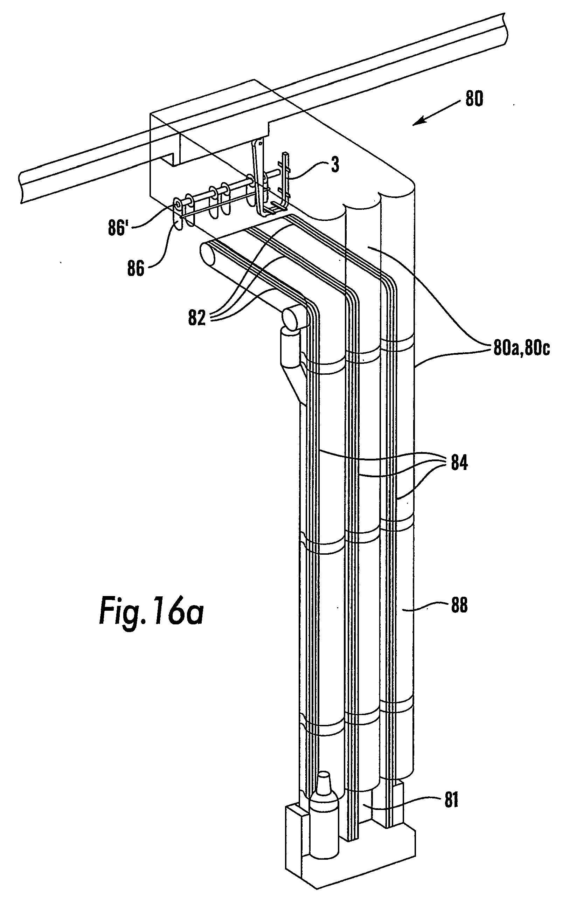

A transfer unit 80 is illustrated in figure 16a. The transfer unit comprises tracks 80a-80c, an entry portion 83 and delivery portion 81. Each of the tracks 80a-80c comprises a horizontally oriented feed device, which is illustrated in figure 16a as a horizontal conveyor belt 82, and a vertically oriented feed device, which is illustrated in the figure as a vertical conveyor belt 84. Alternatively, a common horizontal conveyor belt may be provided for all the tracks 80a-80c. The vertical conveyor belts 84 are shown mounted in tubes 88a-88c, which are preferably made of transparent plastic, thus permitting a display of the products for advertising purposes. Alternatively, a common cover may be provided over the vertical conveyor belts. The transport unit's product holder 3 is illustrated located in a vertical position in connection with the track system 6 at the entry portion 83 of one of the tracks 80a. In the figure there are also illustrated guide devices 86, which are rotatably mounted about an axis 86'. On arrival at the transfer unit, the transport unit's product holder 3 is arranged between the transfer unit's entry portion 83 and the guide devices 86. On rotation of the guide devices about the axis 86', the product located in the product holder 3 is pushed into the relevant track. In the figure it can also be seen that a product is located in the delivery portion 81 ready for collection.

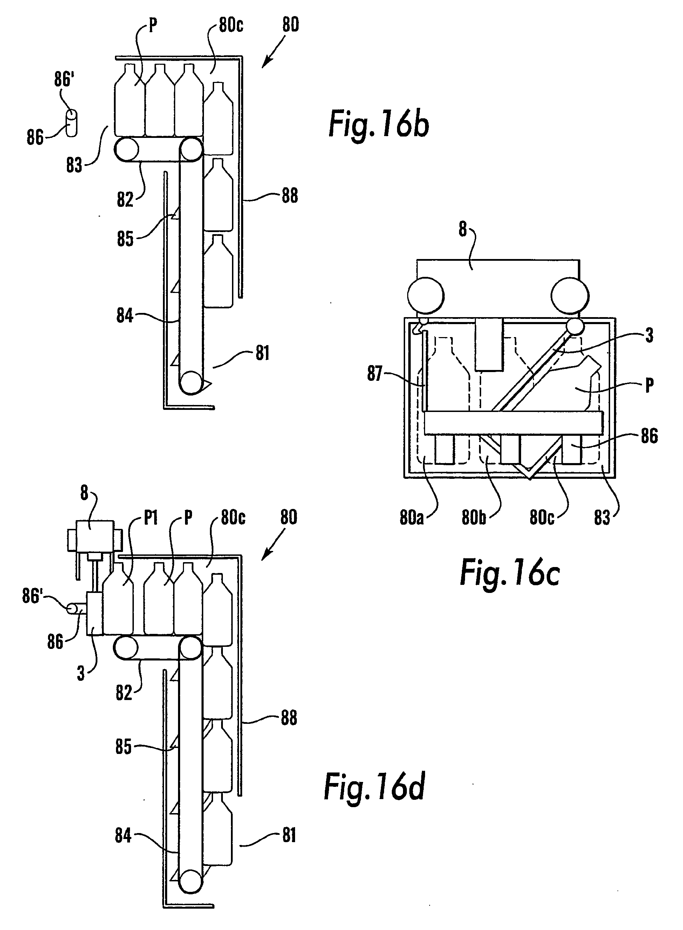

Figure 16b illustrates a principle drawing of transfer unit 80 where it is filled up with products and a product is collected from the transfer unit's delivery portion 81. The figure illustrates the transfer unit 80 in section viewed from the side. The reference numerals in the figure refer to the same components as in figure 16a. The delivery portion 81 may be provided, for example, at a customer service counter, thus enabling the customer to help himself to the products. The horizontal conveyor belt 82 moves the products from the entry portion 83 up to transfer to the vertical conveyor belt 84. The vertical conveyor belt 84 is illustrated provided with lugs 85 for supporting the products when they are moved along the vertical conveyor belt 85 up to the delivery portion 81.

Figure 16c illustrates the entry portion viewed from a point behind the guide devices 86. The figure illustrates the transport unit 8 on arrival at the transfer unit 80. A physical obstacle 87 releases the product holder 3 from abutment against the transport unit 8, thus enabling the product holder 3 to be moved to a vertical position. The transport unit 8 then positions the product at one of the tracks 80a-80c, which are illustrated here by bottle contours. In the figure a guide device 86 is shown provided for each of the tracks 80a-80c, and in an alternative version a common guide device may be employed for all the tracks 80a-80c.

In figure 16d the transfer unit is viewed from the side. The transport unit's product holder 3 is brought into a vertical position and positioned at the correct track. In the figure the guide device 86 is shown as it is rotated about its axis 86', thus causing the product P 1 to be moved from the product holder 3 in through the entry portion 83. Prior to delivery of the product P1, the vertical conveyor belt 84 has moved a new product forward so that it is accessible in the delivery portion 81. The horizontal conveyor belt 82 is then moved forward, thus causing the innermost product to be transferred to the vertical conveyor belt 84. The remaining products on the horizontal conveyor belt 82 are moved inwards in the transfer unit 80, thus making room for the product that has to be transferred from the transport unit 8.

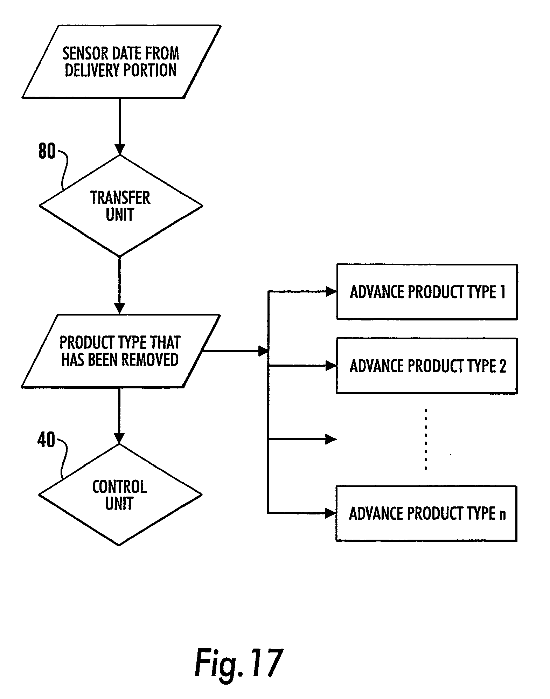

Figure 17 is a schematic overview of the control of the transfer unit 80 and the signal transmission conducted between the control system and the transfer unit 80 in the system. It can be seen from the figure that when a product is removed from the transfer unit, for example by a customer, based on information from a sensor mounted in the transfer unit's delivery portion, it causes a new product of the same type to be moved forward in the transfer unit 80. Information is further transmitted to the control unit concerning which type of product has been delivered from the transfer unit 80.

## Claims

1. A system for transferring products (P) from an area for storing a stock of goods to an area where the products (P) have to be delivered, where the system includes a transport unit (8) for conveying the products (P), where the transport unit (8) moves along a track system,
**characterised in that** the system includes the following units:
- a transport unit (8) with a propulsion unit, a product holder (3) for placing at least one product (P1), an energy storage unit(s) (7) for storing energy for driving the propulsion unit and a control unit for controlling the propulsion unit,
- a track system along which the transport unit is moved, where the transport unit conveys the products between the various units,
- a charging unit for charging the transport unit's energy storage unites(s) (7),
- a storage unit (50,70) for storing products (P), together with a product collector (60), which receives a product (P1) from the storage unit (50,70) and also makes the product (P1) accessible, thus enabling it to be transferred to the transport unit's product holder (3),
- a product rotator (42) where the product is oriented in such a manner that the product's identifying features or label are displayed in a desired position during transport in the track system and/or on delivery, or the product may be rejected if it is of inferior quality or of the wrong type,
- a transfer unit (80) with an entry portion (83) and delivery portion (81), where the product (P1) is delivered and fed to a delivery area for collection, for example, by a customer, where there is a difference in level between the transfer unit's entry portion (83) and delivery portion (81),
- a central control unit for transmitting and receiving signals to/from the different units in the system.

2. A system according to claim 1,
**characterised in that** the track system is composed of a rail track consisting of several rail modules, where the rail modules are adapted for fixing in holders by clamping them into rubber profiles integrated in the holders.

3. A method for controlling a system according to claim 1 for transferring products (P) from an area for storing a stock of goods to an area where the products (P) are to be delivered, via a track system, wherein the system comprises several independent units, including at least one transport unit (8) for conveying the products (P) that travel along a track system, a charging unit for energy transfer to the transport unit, a storage unit for storing the products (P), a product rotator for orienting the product into a desired position and a transfer unit (80) where the product (P) is delivered and fed to a delivery area for collection,
**characterised in that**
- a central control unit (40) receives signals from the transfer unit (80) to the effect that a product of a specific type has to be replaced in the transfer unit (80),
- on the basis of the received signals, the control unit (40) transmits signals to at least one of the storage unit (44), the charging unit (45), the transport unit (8) and the product rotator (42) with information on which type of product has to be replaced in the transfer unit (80),
- the transport unit (8) can communicate directly with at least one of the independent units for transmitting/receiving signals,
- the transport unit (8) moves in the system according to preprogrammed information in a control unit integrated in the transport unit concerning how it should move in the system on receipt of signals from the central control unit (40) and/or other units in the system.

4. A system according to claim 1, and including a transport unit for transporting a product along a rail track (6) comprising
- a body,
- guide elements (5, 2a, 2b, 2c) connected to the body,
- a motor (1) arranged to drive the guide elements,
- at least one energy storage unit (7) arranged to supply the motor with energy,
**characterised in that** it comprises
- a product holder (3), preferably arranged on the underside of the body,
- at least one detection device for detecting information transmitters mounted in the rail track (6) and receiving information signals therefrom,
- a control unit comprising a processor unit and a memory device, arranged to control the motor on the basis of signals from the detection device.

5. A system according to claim 1, and including a device for rotating a product (P1),
**characterised in that** it comprises
- at least one roller device (22, 23) arranged to rotate the product (P1),
- an optical reading unit for reading and registering the product's (P1) optical characteristic,
- a memory device for storing optical characteristics, and
- a processing device connected to the roller device(s) (22, 23) and the reading unit(s), arranged to compare data from the optical reading unit and stored optical characteristics, and arranged to receive and/or transmit signals to an external unit based on the result of the comparison.

6. A method for rotating a product in a system according to Claim 1 by means of roller devices, **characterised in that** it comprises the steps of
- pro-registering characteristic reference data and comparison criteria in a memory device,
- registering measured data from a reading unit in a memory device,
- comparing measured data from the reading unit with the prestored reference data, and
- if the result of the comparison satisfies predetermined criteria, calculating the number of steps the product has to be rotated, and
transmitting a signal to the roller devices comprising information on the number of steps the product has to be rotated, or
- if the result of the comparison does not satisfy the predetermined criteria, transmitting a signal to the roller devices, which tilt one roller down, thereby ejecting the product.

7. A system according to claim 1, and including a storage unit (50, 70) for storing products (P) comprising at least one abutment portion (58), at least one delivery opening (53) for delivering the product and at least one supporting device (51),
**characterised in that**
- the abutment portion's (58) longitudinal axis is preferably oriented at an angle that deviates relative to the vertical axis,
- the supporting device (51, 71, 72) is mounted movably in the storage unit (50, 70) and is suitable for placing products,
- the supporting device (51,71, 72) is tilted, thus forming an angle between the supporting device's surface on which the products are placed and a plane perpendicular to the abutment portion's longitudinal axis,
- a delivery opening (53) is provided in or in connection with the abutment portion (58), the delivery opening (58) being adapted to suit the size and shape of the product
- the products (P) may be stacked -in layers on the supporting device (51, 71, 72) in such a manner that the products (P) are oriented with a rolling direction towards the abutment portion (58) in which or in connection with which the delivery opening (53) is arranged.

8. A system as claimed in claim 1, and including a unit for transferring products (P) between two areas, one area shifted to the other, in order to obtain transport of products (P) for delivery, for example, to a customer,
**characterised in that** the transfer unit (80) comprises one or more tracks (80a-80c), where the tracks (80a-80c) are provided With an entry portion (83) for inserting products (P) into the transfer unit (80) and a delivery portion (81) for delivering products (P) from the transfer unit (80), each track (80a-80c) comprising at least one horizontally oriented feed device (82), followed by at least one vertically oriented feed device (84), thus producing a difference in level between the entry portion (83) and the delivery portion (81), and the feed devices (82, 84) are adapted for temporary storage of the products to be delivered at the delivery portion.

9. A system as claimed in claim 1, and including a device (60) for collecting products (P) from a storage unit (50, 70) for storing products (P), where the product collector (60) is suited for receiving products (P) from the storage unit (50, 70) and then delivering the products (P) to a transport unit (8),
**characterised in that** the product collector's (60) upper portion is designed to be particularly suited for abutment of a product, the portion preferably comprising substantially tilted support surfaces (61), together with a groove (64) preferably provided between the tilted support surfaces (61), the groove (64) being arranged for receiving a transport unit's product holder (3), and that furthermore the product collector (60) can be moved between different positions, preferably in a vertical direction, or the product collector (60) may be located near the storage unit (50, 70).

10. A system as claimed in claim 1 for transferring a product from a storage unit (50, 70) to a product collector (60) and on from the product collector (60) to a transport unit (8), wherein the transport unit (8) comprises a device for holding the product, **characterised in that**
- the storage unit (50, 70) is designed with an opening (53) for delivery of products (P) to the product collector (60),
- the product collector (60) is designed with a portion suitable for abutment of a product, together with a groove (64) where the Transport unit's product holder (3) is positioned for collection of the product,
- the product collector (60) can be moved between, different positions relative to the storage unit, where:
- in a lower position, the product collector (60) permits products (P) to be delivered through the delivery opening (53) in such a manner that at least one product is brought into abutment in the product collector (60),
- in an upper position, the product collector (60) closes the delivery opening (53) while at the same time the product is made accessible for delivery to the transport unit (8),
- in an intermediate position, the product collector (60) holds the product in this position until transfer of the product to the transport unit's product holder (3) is possible or awaits information concerning movement to the upper position, the delivery opening (53) being kept closed in this intermediate position.

## Patentansprüche

1. System zur Transferieren von Produkten (P) aus einem Bereich zum Lagern eines Warenvorrats zu einem Bereich, wo die Produkte (P) abgegeben werden sollen, wobei das System eine Transporteinheit (8) zum Befördern der Produkte (P) umfasst, wobei sich die Transporteinheit (8) entlang eines Spursystems bewegt, **dadurch gekennzeichnet, dass** das System die folgenden Einheiten umfasst:
- eine Transporteinheit (8) mit einer Vortriebseinheit, eine Produkthalteeinrichtung (3) zum Unterbringen mindestens eines Produkts (P1), eine (mehrere) Energiespeichereinheit(en) (7) zum Speichern von Energie, um die Vortriebseinheit anzutreiben, und eine Steuereinheit zum Steuern der Vortriebseinheit,
- ein Spursystem, entlang dem die Transporteinheit bewegt wird, wobei die Transporteinheit die Produkte zwischen den verschiedenen Einheiten befördert,
- eine Ladeeinheit zum Laden der Energiespeichereinheit(en) (7) der Transporteinbeit,
- eine Lagereinheit (50, 70) zum Lagern von Produkten (P) zusammen mit einer Produktsammeleinriehtung (60), die ein Produkt (P1) aus der Lagereinheit (50, 70) aufnimmt und das Produkt (P1) auch zugänglich macht, wodurch ermöglicht wird, dass es zu der Produkthalteeinrichtung (3) der Transporteinheit transferiert werden kann,
- eine Produktdrehvorrichtung (42), bei der das Produkt so ausgerichtet wird, dass die kennzeichnenden Merkmale oder das Etikett des Produkts an einer gewünschten Stelle im Spursystem und/oder bei der Angabe angezeigt werden, oder das Produkt zurückgewiesen werden kann, falls es von minderer Qualität oder von der falschen Art ist,
- eine Transfereinheit (80) mit einem Eingabeabschnitt (83) und einem Abgabeabschnitt (81), in der das Produkt (P1) einem Abgabebereich zu- und in diesen eingeführt wird, um beispielsweise durch einen Kunden abgeholt zu werden, wobei ein Höhenunterschied zwischen dem Eingabeabschnitt (83) und dem Abgabeabschnitt (81) der Transfereinheit besteht,
- ein zentrales Steuersystem zum Senden und Empfangen von Signalen an die/aus den verschiedenen Einheiten im System.

2. System nach Anspruch 1, **dadurch gekennzeichnet, dass** sich das Spursystem aus einer Schienenspur zusammensetzt, die aus verschiedenen Schienenmodulen besteht, wobei die Schienenmodule dazu ausgelegt sind, in Halter eingespannt zu werden, indem sie in Gummiprofile geklemmt werden, die in die Halter eingebaut sind.

3. Verfahren zum Steuern eines Systems nach Anspruch 1 zum Transferieren von Produkten (P) über ein Spursystem aus einem Bereich zum Lagern eines Warenvorrats zu einem Bereich, wo die Produkte (P) abgegeben werden sollen, wobei das System mehrere unabhängige Einheiten, die mindestens eine Transporteinheit (8) zum Befördern der entlang eines Spursystems laufenden Produkte (P) umfasst, eine Ladeeinheit zur Energieübertragung auf die Transporteinheit, eine Lagereinheit zum Lagern der Produkte (P), eine Produktdrehvorrichtung zum Ausrichten des Produkts in einer gewünschten Position, und eine Tunsfereinheit (80) umfasst, in der das Produkt (P) einem Abgabebereich zur Abholung zu- und in diesen eingeführt wird, **dadurch gekennzeichnet, dass**
- eine zentrale Steuereinheit (40) Signale von der Transfereinheit (80) empfängt, damit ein Produkt einer bestimmten Art in der Transfereinheit (80) ausgetauscht wird,
- die Steuereinheit (40) auf Grundlage der empfangenen Signale Signale an die Lagereinheit (44) und/oder die Ladeeinheit (45) und/oder die Transporteinheit (8) und/oder die Produktdrehvorrichtung (42) mit Information darüber schickt, welche Art von Produkt in der Transfereinheit (80) ausgetauscht werden soll,
- die Transporteinheit (8) direkt mit mindestens einer der unabhängigen Einheiten kommunizieren kann, um Signale zu senden/zu empfangen,
- sich die Transporteinheit (8) in dem System nach einer Information bewegen kann, die in einer in die Transporteinheit eingebauten Steuereinheit vorprogrammiert ist und die Art und Weise betrifft, in der sie sich im System beim Empfang von Signalen aus der zentralen Steuereinheit (40) und/oder anderen Einheiten im System bewegen sollte.

4. System nach Anspruch 1, das noch eine Transporteinheit zum Transportieren eines Produkts entlang einer Schienenspur (6) umfasst, Folgendes umfassend;
- einen Körper,
- Führungselemente (5, 2a, 2b, 2c), die an den Körper angeschlossen sind,
- einen Motor (1), der dazu eingerichtet ist, die Führungselemente anzutreiben,
- mindestens eine Energiespeichereinheit (7), die dazu eingerichtet ist, den Motor mit Energie zu versorgen,
**dadurch gekennzeichnet, dass** es umfasst:
- einen Produkthalteeinrichtung (3), die vorzugsweise an der Unterseite des Körpers angeordnet ist,
- mindestens eine Erfassungsvorrichtung zum Erfassen von Informationsübertragungseinrichtungen, die in der Schienenspur (6) angebracht sind, und zum Empfangen von Informationssignalen von diesen,
- eine Steuereinheit mit einer Prozessoreinheit und einer Speichervorrichtung, die dazu eingerichtet sind, den Motor auf Grundlage der Signale aus der Erfassungsvorrichtung zu steuern.

5. System nach Anspruch 1, das eine Vorrichtung zum Drehen eines Produkts (P1) umfasst, **dadurch gekennzeichnet, dass** es umfasst:
- mindestens eine Rollenvorrichtung (22, 23), die dazu eingerichtet ist, das Produkt (P1) zu drehen,
- eine optische Leseeinheit zum Lesen und Registrieren der optischen Kennzeichen des Produkts (P1),
- eine Speichervorrichtung zum Speichern der optischen Kennzeichen, und
- eine Verarbeitungsvorrichtung, die an die Rollenvorrichtung(en) (22, 23) und die Leseeinheit(en) angeschlossen und dazu eingerichtet ist, Daten aus der optischen Leseeinheit und gespeicherte optische Kennzeichen zu vergleichen, und dazu eingerichtet ist, Signale auf Grundlage des Ergebnisses des Vergleichs von einer externen Einheit zu empfangen und/ oder an diese zu senden.

6. Verfahren zum Drehen eines Produkts mittels Rollenvorrichtungen in einem System nach Anspruch 1, **dadurch gekennzeichnet, dass** es die folgenden Schritte umfasst:
- Vorab erfolgendes Speichern von kennzeichnenden Referenzdaten und Vergleicliskxitexien in einer Speichervorrichtung,
- Speichern vom Messdaten aus einer Leseeinheit in einer Speichervorrichtung,
- Vergleichen von Messdaten aus der Leseeinheit mit den vorab gespeicherten Referenzdaten, und
- falls das Ergebnis des Vergleichs vorbestimmte Kriterien erfüllt, Berechnen der Anzahl von Schritten, um die das Produkt gedreht werden soll, und Übertragen eines Signals an die Rollenvorrichtungen, das Information über die Anzahl von Schritten enthält, um die das Produkt gedreht werden soll, oder
- falls das Ergebnis des Vergleichs die vorbestimmten Kriterien nicht erfüllt, Senden eines Signal an die Rollenvorrichtungen, welche eine Rolle nach unten schräg stellen, wodurch das Produkt ausgeworfen wird.

7. System nach Anspruch 1, das noch eine Lagereinheit (50, 70) zum Lagern von Produkten (P) umfasst, die mindestens einen Anschlagabschnitt (58), mindestens eine Abgabeöffnung (53) zur Abgabe des Produkts und mindestens eine Halterungsvorrichtung (51) umfasst, **dadurch gekennzeichnet, dass**
- die Längsachse des Anschlugabschzaikts (58) vorzugsweise in einem Winkel ausgerichtet ist, der in Bezug auf die vertikale Achse abweicht,
- die Halterungsvorrichtung (51, 71, 71) in der Lagereinheit (50, 70) beweglich angebracht ist und sich dazu eignet, Produkte unterzubringen,
- die Halterungsvorrichtung (51, 71, 72) schräg gestellt ist, wodurch ein Winkel zwischen der Oberfläche der Halterungsvorrichtung, auf der die Produkte untergebracht sind, und einer zur Längsachse des Anschlagabschnitts senkrechten Ebene entsteht,
- eine Abgabeöffnung (53) in oder in Verbindung mit dem Anschlagabschnitt (58) vorgesehen ist, wobei die Abgabeöffnung (58) dazu ausgelegt ist, sich der Größe und Form des Produkts anzupassen,
- die Produkte (P) so in Lagen auf der Halterungsvorrichtung (51, 71, 72) gestapelt werden können, dass die Produkte (P) mit einer Rollrichtung zum Anschlagabschnitt (58) hin ausgerichtet sind, in dem oder in Verbindung mit dem die Abgabeöffnung (53) angeordnet ist.

8. System nach Anspruch 1, das noch eine Einheit zum Transferieren von Produkten (P) zwischen zwei Bereichen umfasst, wobei ein Bereich zum anderen transferiert wird, um einen Transport von Produkten (O) zur Abgabe, beispielsweise an einen Kunden, zu erzielen, **dadurch gekennzeichnet, dass** die Transfereinheit (80) eine oder mehrere Spur(en) (80a - 80c) umfasst, wobei die Spuren (80a - 80c) mit einem Eingabeabschnitt (83) zum Einführen von Produkten (P) in die Transfereinheit (80) und einen Abgabeabschnitt (81) zum Abgeben von Produkten (P) aus der Transfereinheit (80) versehen sind, wobei jede Spur (80a - 80c) mindestens eine horizontal ausgerichtete Zufuhrvorrichtung (82) umfasst, auf die mindestens eine vertikal ausgerichtete Zufuhrvorrichtung (84) folgt, wodurch ein Höhenunterschied zwischen dem Eingabeabschnitt (83) und dem Abgabeabschnitt (81) entsteht, und die Zufuhrvorrichtungen (82, 84) zum vorübergehenden Lagern der am Abgabeabschnitt abzugebenden Produkte ausgelegt sind.

9. System nach Anspruch 1, das noch eine Vorrichtung (60) zum Sammeln von Produkten (P) aus der Lagereinheit (50, 70) zum Lagern von Produkten (P) umfasst, wobei sich die Produktsammeleinrichtung (60) dazu eignet, Produkte (P) aus der Lagereinheit (50, 70) aufzunehmen, und die Produkte (P) dann an eine Transporteinheit (8) abzugeben, **dadurch gekennzeichnet, dass** der obere Abschnitt der Produktsammelcinrichtung (60) dazu ausgelegt ist, sich besonders als Anschlag für ein Produkt zu eignen, wobei der Abschnitt vorzugsweise im Wesentlichen schräg gestellte Halterungsflächen (61) zusammen mit einer Rille (64) umfasst, die vorzugsweise zwischen den schräg gestellten Halterungsflächen (61) vorgesehen ist, wobei die Rille (64) dazu eingerichtet ist, eine Produkthalteeinrichtung (3) der Transporteinheit aufzunehmen, und dass darüber hinaus die Produktsammeleinrichtung (60) zwischen verschiedenen Positionen vorzugsweise in einer vertikalen Richtung bewegt werden kann, oder die Produktsammeleinrichtung (60) nahe an der Lagereinheit (50, 70) angeordnet werden kann.

10. System nach Anspruch 1 zum Transferieren eines Produkts aus einer Lagereinheit (50,70) zu einer Produktsammeleinrichtung (60) und von der Sammeleinrichtung (60) weiter zu einer Transporteinheit (8), wobei die Transporteinheit (8) eine Einrichtung zum Halten des Produkts umfasst, **dadurch gekennzeichnet, dass**
- die Lagereinheit (50, 70) mit einer Öffnung (53) zur Abgabe von Produkten (P) an die Produktsammeleinrichtung (60) ausgelegt ist,
- die Produktsammeleinrichtung (60) mit einem Abschnitt, der sich als Anschlag für ein Produkt eignet, zusammen mit einer Rille (64) ausgelegt ist, in der die Produkthalteeinrichtung (3) der Transporteinheit zur Aufnahme des Produkts angeordnet ist,
- die Ptöduktsarnmelei.nrichtung (60) zwischen verschiedenen Positionen in Bezug auf die Lagereinheit bewegt werden kann, wobei:
- in einer unteren Position es die Produktsammeleinrichtung (60) ermöglicht, dass Produkte (P) durch die Abgabeöffnung (53) so abgegeben werden können, dass mindestens ein Produkt in Anlage an die Praduktsammeleinrichtung (60) gebracht wird,
- in einer oberen Position die Produktsammeleinrichtung (60) die Abgabeöffnung (53) schließt, während das Produkt gleichzeitig für eine Abgabe an die Transporteinheit (8) zugänglich gemacht wird,
- in einer Zwischenposition die Produktsammeleinrichtung (60) das Produkt in dieser Position hält, bis ein Transferieren des Produkts zur Produkthalteeinrichtung (3) der Transporteinheit möglich wird, oder auf eine Information wartet, welche die Bewegung zur oberen Position betrifft, wobei die Abgabeöffnung (53) in dieser Zwischenposition geschlossen gehalten wird.

## Revendications

1. Système pour transférer des produits (P) d'une zone de stockage d'un stock de marchandises vers une zone où les produits (P) doivent être distribués, dans lequel le système comprend une unité de transport (a) pour transporter les produits (P), dans lequel l'unité de transport (8) se déplace le long d'un système de rails,
**caractérisé en ce que** le système comprend les unités suivantes :
une unité de transport (8) avec une unité de propulsion, un dispositif de retenue de produit (3) pour placer au moins un produit (P1), une ou des unités d'accumulation d'énergie (7) pour stocker de l'énergie pour entraîner l'unité de propulsion et une unité de commande pour contrôler l'unité de propulsion,
un système de rails le long duquel l'unité de transport se déplace, dans lequel l'unité de transport transporte les produits entre les diverses unités,
une unité de chargement pour charger la ou les unités d'accumulation d'énergie (7) de l'unité de transport,
une unité de stockage (50, 70) pour stocker des produits (P), associée à un collecteur de produit (60), qui reçoit un produit (P1) de l'unité de stockage (50, 70) et qui rend le produit (P1) accessible, lui permettant ainsi d'être transféré vers le dispositif de retenue de produit (3) de l'unité de transport,
un dispositif de rotation de produit (42) dans lequel le produit, est orienté d'une manière telle que les caractéristiques d'identification du produit ou étiquette apparaissent dans une position souhaitée pendant le transport dans le système de rails et/ou à la distribution, ou le produit peut être rejeté s'il est de qualité inférieure ou de type incorrect,
une unité de transfert (80) avec une partie d'entrée (83) et une partie de distribution (81), dans laquelle le produit (P1) est distribué et amène vers une zone de distribution pour être collecté, par exemple, par un utilisateur, dans laquelle il existe une différence de niveau entre la partie d'entrée (83) et la partie de distribution (81) de l'unité de transfert,
une unité de commande centrale pour transmettre et recevoir des signaux aux/des différentes unités du système.

2. Système selon la revendication 1, **caractérisé en ce que** le système de rails est constitué d'une voie sur rail comprenant plusieurs modules de rail, dans lequel les modules de rail sont adaptés pour être fixés dans des dispositifs de retenue en les encliquetant dans des profils en caoutchouc intégrés dans les dispositifs de retenue,

3. Méthode de contrôle d'un système selon la revendication 1 pour transférer des produits (P) d'une zone de stockage d'un stock de marchandises vers une zone où les produite (P) doivent être distribués, via un système de rails, dans laquelle le système comprend plusieurs unités indépendantes, notamment au moins une unité de transport (8) pour transporter les produits (P) qui sont acheminés le long d'un système de rails, une unité de chargement pour fournir de l'énergie a l'unité de transport, une unité de stockage pour stocker les produits (P), un dispositif de rotation de produit pour orienter le produit dans une position souhaitée et une unité de transfert (80) dans laquelle le produit (P) est distribué et amené vers une zone de distribution pour être collecté,
**caractérisée en ce que**
une unité de commande centrale (40) reçoit des signaux de l'unité de transfert (80) avec un effet tel qu'un produit d'un type spécifique doit être remplacé dans l'unité de transfert (80),
en fonction des signaux reçus, l'unité de commande (40) transmet des signaux à au moins une de l'unité de stockage (44), de l'unité de chargement (45), de l'unité de transport (8) et du dispositif de rotation de produit (42) contenant des informations sur ledit de produit remplacer dune l'unité de transfert (BO),
l'unité de transport (B) peut communiquer directement avec au moins une des unités indépendantes pour transmettre/recevoir des signaux,
l'imite de transport (8) se déplace dans un système en fonction d'informations préprogrammées dans une unité de commande intégrée à l'unité de transport en ce qui concerne comme elle doit se déplacer dans le système à la réception de signaux de l'unité de commande centrale (40) et/ou d'autres unités du système.

4. Système selon la revendication 1, et comprenant une unité de transport pour transporter un produit le long d'un système de rails (6) comprenant un corps,
des éléments de guidage (5, 2a, 2b, 2c) reliés au corps,
un moteur (1) disposé pour entraîner les éléments de guidage,
au moins une unité d'accumulation d'énergie (7) disposer pour fournir de l'énergie au moteur, **caractérisé en ce qu'**il comprend
un dispositif de retenue de produit (3), de préférence disposé à l'arrière du corps,
au moins un dispositif de détection pour détecter des émetteurs d'information installés dans le système de rails (6) et la réception, de signaux d'informations de ceux-ci,
une unité de commande comprenant une unité de traitement et un dispositif de mémoire, disposée pour contrôler le moteur en fonction des signaux du dispositif de détection.

5. système selon la revendication 1, et comprenant un dispositif pour faire pivoter un produit (P1), **caractérisé en ce qu'**il comprend
au moins un dispositif de roulement (22, 23) disposé pour faire pivoter le produit (P1),
une unité de lecture optique pour lire et enregistrer la caractéristique optique du produit (P1),
un dispositif de mémoire pour stocker des caractéristiques optiques, et
un dispositif de traitement relié au ou aux dispositif (s) de roulement (22, 23) et à la ou aux unité (s) de lecture, dispose pour comparer des données de l'unité de lecture optique et des caractéristiques optiques stockées, et disposé pour recevoir et/ou transmettre des signaux à une unité externe en fonction du résultat de la comparaison.

6. Méthode de rotation d'un produit dans un système selon la revendication 1 à l'aide de dispositifs de roulement, **caractérisée en ce qu'**elle comprend les étapes consistant à
pré-enregistrer des données de référence de caractéristique et des critères de comparaison dans un dispositif de mémoire,
enregistrer des données mesurées d'uns unité de lecture dans un dispositif de mémoire,
comparer des données mesurées de l'unité de lecture avec les données de référence préalablement stockées, et
si le résultat de la comparaison répond eux critères prédéterminés, calculer le nombre d'étapes de rotation du produit, et
transmettre un signal aux dispositifs de roulement contenant des informations sur le nombre d'étapes de rotation du produit, ou
si le résultat de la comparaison ne répond pas aux critères prédéterminés, transmettre un signal aux dispositifs de roulement, qui inclinent un roulement vers le bas, éjectant ainsi le produit.

7. Système selon la revendication 1, et comprenant une unité de stockage (50, 70) pour stocker des produits (P) comprenant au moins une partie de butée (56), au moins une ouverture de distribution (53) pour distribuer le produit et au moins un dispositif de support (51), **caractérisé en ce que**
l'axe longitudinal de la partie de butée (58) est de préférence orienté selon un angle qui dévie par rapport à l'axe vertical,
le dispositif de support (51, 71, 72) est monté de manière amovible dans l'unité de stockage (50, 70) et est adapté pour placer les produits,
le dispositif de support (51, 71, 72) est incliné, formant ainsi un angle entre la surface du dispositif de support sur laquelle Les produits sont placée et un plat perpendiculaire à l'axe longitudinal de la partie de butée,
une ouverture de distribution (53) est prévue dans ou en relation avec la partie de butée (58), l'ouverture de distribution (58) étant adaptée pour correspondre la taille et à la forme du produit,
les produits (P) peuvent être empilés en couches sur le dispositif de support (51, 71, 72) d'une manière telle que les produite (P) sont orientée selon un sens de roulement vers la partie de butée (58) dans laquelle ou en relation avec laquelle l'ouverture de distribution (53) est disposée.

8. Système selon la revendication 1, et comprenant une unité pour transférer des produits (P) entre deux zones, une zone décalée par rapport à l'autre, afin d'obtenir un transfert des produits (P) pour la distribution, par exemple, à un client, **caractérisé en ce que** l'unité de transfert (80) comprend un ou plusieurs rails (80a à 80c), dans laquelle les rails (80a à 80c) sont pourvus d'une porte d'entrée (83) pour insérer des produits (P) dans l'unité de transfert (80) et une partie de distribution (81) pour distribuer des produits (P) à partir de l'unité de transfert (80), chaque rail (80a à 80c) comprenant au moins un dispositif d'amenée orienté horizontalement (82), suivi d'au moine un dispositif d'amené orienté verticalement (64), générant ainsi une différence de niveau entre la partie d'entrée (83) et la partie de distribution (81), et les dispositifs d'amenée (82, 84) sont adaptés à un stockage temporaire des produits à distribuer au niveau de la partie de distribution.

9. Système selon la revendication 1, et comprenant un dispositif (60) pour collecter des produits (P) d'une unité de stockage (50, 70), pour stocker des produits (P), dans lequel, le collecteur de produit (60) est adapté pour recevoir des produits (P) de l'unité de stockage (50, 70) et pour distribuer ensuite les produits (P) à une unité de transport (8), **caractérisé en ce que** la partie supérieurs du collecteur de produit (60) est conçus pour être tout particulièrement adaptée pour former butée d'un produit, la partie comprenant de préférence des surfaces de support (61) sensiblement inclinées avec une rainure (64) prévue de préférence entre les surfaces de support inclinées (61), la rainure (64) étant disposée pour recevoir le dispositif de retenue de produit (3) d'une unité de transport, et **en ce qu'**en outre le collecteur de produit (60) peut être déplace entre différentes positions, de préférence verticalement, ou le collecteur de produit (60) peut être situé à proximité de l'unité de stockage (50, 70).

10. Système selon la revendication 1 pour transférer un produit d'une unité de stockage (50, 70) vers un collecteur de produit (60) et du collecteur de produit (60) vers une unité de transport (8), dans lequel l'unité de transport (8) comprend un dispositif pour retenir le produit, caractérisa en ce que
l'unité de stockage (50, 70) est conçue avec une ouverture (53) pour la distribution de produits (P) vers le collecteur de produit (60),
le collecteur de produit (60) est conçu avec une partie adaptée pour former butée d'un produit, avec une rainure (64) dans laquelle le dispositif de retenue de produit (3) de l'unité de transport est placé pour collecter le produit,
le collecteur de produit (60) peut être déplacé entre différentes positions par rapport à l'unité de stockage, dans lesquelles ;
dans une position inférieure, le collecteur de produit (60) permet aux produite (P) d'être distribués via l'ouverture de distribution (53) d'une manière telle qu'au moins un produit est amené en butée dans le collecteur de produit (60),
dans une position supérieure, le collecteur de produit (60) ferme l'ouverture de distribution (53) alors que, simultanément, le produit est rendu accessible pour distribution à l'unité de transport (8),
dans une position intermédiaire, le collecteur de produit (60) retient le produit dans cette position jusqu'à ce que le transfert du produit vers le dispositif de retenue de produit (3) de l'unité de transport soit possible ou attend des informations relatives au déplacement dans la position supérieure, l'ouverture de distribution (53) étant maintenue fermée dans cette position intermédiaire.
